# EUROPEAN PATENT APPLICATION

(11) **EP 4 597 241 A1**
(43) Date of publication of application: **06.08.2025**
(21) Application number: 23871641.9
(22) Date of filing: 29.08.2023
(51) Int. Cl.: G05B 19/404, B23Q 3/155, B23Q 15/26

(54) **NUMERICAL VALUE CONTROL DEVICE, NUMERICAL VALUE CONTROL SYSTEM, CONTROL METHOD, AND PROGRAM**

(30) Priority: 29.09.2022 JP 2022156001
(71) Applicant: BROTHER KOGYO KABUSHIKI KAISHA, Nagoya-shi, Aichi 467-8561 (JP)
(72) Inventor: KURAHASHI Yugo, Nagoya-shi, Aichi 467-8562 (JP)
(74) Representative: Becker, Eberhard
(86) International application number: PCT/JP2023/031131
(87) International publication number: WO 2024/070400

(57) **Abstract**

Provided are a numerical value control device, a numerical value control system, a control method, and a program, with which a primary shaft can be retracted to an appropriate position when executing magazine rotation correction. In a state in which a primary shaft is stopped at a point M4 on a tool exchange path 52, a CPU determines whether there is a rotation deviation in the magazine in order to restore the position of the primary shaft in a machining region. If it is determined that there is a rotation deviation, the CPU detects a Z axis of the primary shaft, and determines whether the detected position of the Z axis is at a Z axis ATC origin point. If the detected position is not at the Z axis ATC origin point, there is a possibility that the primary shaft is positioned within a magazine rotation region. In this case, the CPU retracts the primary shaft to the Z axis ATC origin point, and requests an operation or task for executing rotation correction to return the magazine to a reference position. Once the rotation correction has been performed, the CPU moves the primary shaft toward the machining region along a tool exchange path 52, 51.

## Description

### Technical Field

The present invention relates to a numerical value control device, a numerical value control system, a control method, and a program.

### Description of Related Art

A machine tool including a turret-type magazine is known. The magazine is capable of rotating around a pivot shaft, and multiple gripping units are provided along the circumferential direction on an outer periphery thereof. The gripping unit is capable of gripping a tool. The magazine is capable of indexing any of the gripping units to an index position by rotating. During tool exchange of the main shaft, the machine tool moves the main shaft along the tool exchange path, and performs tool transfer between the main shaft and the gripping unit of the magazine by reciprocating between the tool exchange position and the tool exchange origin on the tool exchange path. The tool exchange position corresponds to the index position of the magazine and is the position at which the tool is transferred between the main shaft and the gripping unit. The tool exchange origin is a position at which the magazine can rotate without interference between the tool gripped by the gripping unit and the main shaft.

In some cases, a rotation deviation may occur in the magazine during tool exchange. A rotation deviation refers to a phenomenon in which the magazine deviates from a reference position in the circumferential direction. The reference position of the magazine is the rotation position of the magazine in a state where the gripping unit is indexed to the index position. When a rotation deviation occurs in the magazine, depending on the magnitude of the rotation deviation, the position of the gripping unit may significantly deviate relative to the main shaft, so tools is unable to be transferred. Therefore, for example, a position correction system is known that determines whether performing rotation correction is needed to return the turret (magazine) to the reference position according to the rotation deviation of the turret, and in the case where it is determined that performing rotation correction is needed, requests an operation or work related to rotation correction (for example, refer to Patent Literature 1).

### Related Art

### Patent Literature

Patent Literature 1: Japanese Patent No. 6396380

### SUMMARY

### Technical Problem

However, in the case of implementing rotation correction of the magazine in the aforementioned machine tool, if the position of the main shaft is close to the magazine, the mechanism of the magazine or the tool gripped by the gripping unit may interfere with the main shaft or the tool attached to the main shaft during the rotation of the magazine.

The objective of the present invention is to provide a numerical value control device, a numerical value control system, a control method, and a program that are capable of retracting the main shaft to an appropriate position when executing rotation correction of the magazine. Solution to the Problem

A numerical value control device according to claim 1 includes: a rotation drive unit that rotationally drives a magazine, which includes multiple gripping units capable of gripping tools to be attached to a main shaft of a machine tool, provided along a circumferential direction and rotatable around a pivot shaft, to index any of the gripping units; a storage unit that stores rotation position coordinates of the magazine corresponding to an index position of the gripping unit as reference coordinates indicating a reference position of the magazine; a coordinate detection unit that detects the rotation position coordinates of the magazine; a deviation determination unit that determines whether rotation deviation exists, which is deviation in a circumferential direction of the pivot shaft of the rotation position coordinates of the magazine detected by the coordinate detection unit from the reference coordinates stored in the storage unit; a position detection unit that detects a position of the main shaft; a determination unit that determines whether the position of the main shaft detected by the position detection unit is located within a magazine rotation region, which is a region in which the magazine rotates; and a correction request unit that, when the deviation determination unit determines that the rotation deviation exists, and the determination unit determines that the position of the main shaft is located within the magazine rotation region, requests an operation or task to execute rotation correction to return the magazine to the reference position after retracting the main shaft from the magazine rotation region. When returning the magazine that has rotation deviation to the reference position, the numerical value control device can return the magazine to the reference position after retracting the main shaft from the magazine rotation region if it is determined that the position of the main shaft is within the magazine rotation region. As a result, the numerical value control device can avoid interference between the magazine or the tool gripped by the gripping unit and the main shaft or the tool attached to the main shaft, thereby being able to appropriately performing rotation correction while reducing the likelihood of damage to the magazine, the main shaft, and the tool.

The correction request unit of the numerical value control device according to claim 2 may instruct the rotation drive unit to perform the operation of the rotation correction when the magnitude of the rotation deviation is below a threshold, and may notify an operator to perform the task of the rotation correction when the magnitude of the rotation deviation is at or above the threshold. If the magnitude of the rotation deviation is below the threshold, the rotation correction is performed automatically, which can save effort compared to manually performing the rotation correction. On the other hand, in the case where the magnitude of the rotation deviation is at or above the threshold, the numerical value control device notifies the operator of the task of rotation correction, so the operator can carefully rotate the magazine while checking the surroundings of the magazine.

The numerical value control device according to claim 3 may further include a correction determination unit that determines that the rotation correction is not needed when the magnitude of the rotation deviation is below a threshold, while determining that performing the rotation correction is needed when the magnitude of the rotation deviation is at or above the threshold, and the correction request unit may request an operation or task to execute the rotation correction when the correction determination unit determines that performing the rotation correction is needed. In the case where the magnitude of the rotation deviation is below the threshold, the rotation correction is deemed not needed because moving the main shaft as it is has little effect on the tool transfer. On the other hand, in the case where the magnitude of the rotation deviation is at or above the threshold, the numerical value control device notifies the operator of the task of rotation correction, so the operator can carefully rotate the magazine while checking the surroundings of the magazine.

The correction request unit of the numerical value control device according to claim 4 may request an operation or task to execute the rotation correction after retracting the main shaft in a direction away from the magazine rotation region along a tool exchange path, which is a path for moving the main shaft when performing tool exchange between the main shaft and the gripping unit. When retracting the main shaft from within the magazine rotation region, the numerical value control device can reduce the likelihood of interference between the main shaft or the tool attached to the main shaft and other members by moving the main shaft along the tool exchange path.

The tool exchange path of the numerical value control device according to claim 5 may include a predetermined path connecting a tool exchange position at which the main shaft performs the tool exchange with the magazine, and a tool exchange preparation position which is separated from the tool exchange position in a direction perpendicular to an axial direction of the main shaft and is at the same position as the tool exchange position in the axial direction. The correction request unit may request an operation or task to execute the rotation correction after retracting the main shaft to the tool exchange preparation position along the predetermined path when the main shaft is positioned on the predetermined path and within the magazine rotation region. In the case where the main shaft which is stopped is positioned on the predetermined path of the tool exchange path and within the magazine rotation region, the numerical value control device can safely perform the rotation correction of the magazine by retracting to the tool exchange preparation position along the predetermined path.

In the numerical value control device according to claim 6, the machine tool performs the tool exchange of the main shaft with the magazine by reciprocating the main shaft between a tool exchange position on the tool exchange path and an origin position separated from the tool exchange position in an axial direction of the main shaft. The correction request unit may request an operation or task to execute the rotation correction after retracting the main shaft to the origin position when the main shaft is positioned between the tool exchange position and the origin position and within the magazine rotation region. In the case where the main shaft which is stopped is positioned between the tool exchange position and the origin position and within the magazine rotation region, the numerical value control device can safely perform the rotation correction of the magazine by retracting the main shaft to the origin position.

The deviation determination unit of the numerical value control device according to claim 7 may determine whether the rotation deviation exists when the tool exchange is stopped midway. For example, in the case where an alarm or the like occurs and the tool exchange is stopped midway, the main shaft is in a stopped state. In this case, the numerical value control device determines the rotation deviation of the magazine, and if it is determined that the position of the stopped main shaft is within the magazine rotation region, the magazine can be returned to the reference position after the main shaft is retracted from the magazine rotation region.

The deviation determination unit of the numerical value control device according to claim 8 may determine whether the rotation deviation exists when the power of the machine tool is turned on after being turned off during the tool exchange. In the case where the power of the machine tool is turned on after being turned off during the tool exchange, the main shaft is in a stopped state. In this case, the numerical value control device determines the rotation deviation of the magazine, and if it is determined that the position of the stopped main shaft is within the magazine rotation region, the magazine can be returned to the reference position after the main shaft is retracted from the magazine rotation region.

In the numerical value control device according to claim 9, an axial direction of the main shaft may be horizontal. The numerical value control device of the embodiment can be applied to a horizontal machine tool in which the main shaft extends in the horizontal direction.

A numerical value control system according to claim 10 includes a machine tool and a numerical value control device, in which the numerical value control device includes: a rotation drive unit that rotationally drives a magazine, which includes multiple gripping units capable of gripping tools to be attached to a main shaft of a machine tool, provided along a circumferential direction and rotatable around a pivot shaft, to index any of the gripping units; a storage unit that stores rotation position coordinates of the magazine corresponding to an index position of the gripping unit as reference coordinates indicating a reference position of the magazine; a coordinate detection unit that detects the rotation position coordinates of the magazine; a deviation determination unit that determines whether rotation deviation exists, which is deviation in a circumferential direction of the pivot shaft of the rotation position coordinates of the magazine detected by the coordinate detection unit from the reference coordinates stored in the storage unit; a position detection unit that detects a position of the main shaft; a determination unit that determines whether the position of the main shaft detected by the position detection unit is located within a magazine rotation region, which is a region in which the magazine rotates; and a correction request unit that, when the deviation determination unit determines that the rotation deviation exists, and the determination unit determines that the position of the main shaft is located within the magazine rotation region, requests an operation or task to execute rotation correction to return the magazine to the reference position after retracting the main shaft from the magazine rotation region. This allows the numerical value control system to obtain the same effect as in claim 1. It should be noted that while the numerical value control device controls the operation of the machine tool, the numerical value control device may also control the operation of multiple machine tools.

A control method of a numerical value control device that controls an operation of a machine tool according to claim 11 includes: a rotation drive process of rotationally driving a magazine, which includes multiple gripping units capable of gripping tools to be attached to a main shaft of the machine tool, provided along a circumferential direction and rotatable around a pivot shaft, to index any of the gripping units; a coordinate detection process of detecting rotation position coordinates of the magazine; a deviation determination process of determining whether rotation deviation exists, which is deviation in a circumferential direction of the pivot shaft of the rotation position coordinates of the magazine detected in the coordinate detection process relative to reference coordinates stored in a storage unit that stores the rotation position coordinates of the magazine corresponding to an index position of the gripping unit as the reference coordinates indicating a reference position of the magazine; a position detection process of detecting a position of the main shaft; a determination process of determining whether the position of the main shaft detected in the position detection process is located within a magazine rotation region, which is a region in which the magazine rotates; and correction request process of, when the rotation deviation is determined to exist in the deviation determination process, and the position of the main shaft is determined to be located within the magazine rotation region in the determination process, requesting an operation or task to execute rotation correction to return the magazine to the reference position after retracting the main shaft from the magazine rotation region. The numerical value control device can obtain the effect described in claim 1 by performing each of the processes.

A program for operating a numerical value control device that controls an operation of a machine tool according to claim 12 by causing a computer to execute: rotation drive processing of rotationally driving a magazine, which includes multiple gripping units capable of gripping tools to be attached to a main shaft of the machine tool, provided along a circumferential direction and rotatable around a pivot shaft, to index any of the gripping units; coordinate detection processing of detecting rotation position coordinates of the magazine; deviation determination processing of determining whether rotation deviation exists, which is deviation in a circumferential direction of the pivot shaft of the rotation position coordinates of the magazine detected in the coordinate detection processing relative to reference coordinates stored in a storage unit that stores the rotation position coordinates of the magazine corresponding to an index position of the gripping unit as the reference coordinates indicating a reference position of the magazine; position detection processing of detecting a position of the main shaft; determination processing of determining whether the position of the main shaft detected in the position detection processing is located within a magazine rotation region, which is a region in which the magazine rotates; and correction request processing of, when the rotation deviation is determined to exist in the deviation determination processing, and the position of the main shaft is determined to be located within the magazine rotation region in the determination processing, requesting an operation or task to execute rotation correction to return the magazine to the reference position after retracting the main shaft from the magazine rotation region. By executing each of the processing, the computer of the numerical value control device can obtain the effect described in claim 1.

A numerical value control device according to claim 13 includes a control unit and a storage device that stores a program. The control unit executes the program to implement the control method described in claim 11. As a result, the numerical value control device can obtain the effect described in claim 11.

A computer-readable storage medium storing the program is also novel and useful.

### BRIEF DESCRIPTION OF THE DRAWINGS

FIG. 1 is a perspective view of a machine tool 1.
FIG. 2 is a perspective view of the machine tool 1 (shutter 103: closed).
FIG. 3 is a perspective view of the machine tool 1 (shutter: open).
FIG. 4 is a perspective view of the machine tool 1 (magazine cover omitted).
FIG. 5 is a right side view of the machine tool 1 (magazine cover omitted).
FIG. 6 is a diagram showing the machining region, ATC region, and each of reference points.
FIG. 7 is an image diagram of the magazine rotation region.
FIG. 8 is a block diagram showing the electrical configuration of the machine tool 1.
FIG. 9 is a flowchart of the numerical value control processing.
FIG. 10 is a flowchart of the power-on processing.
FIG. 11 is a flowchart of the alarm detection processing.
FIG. 12 is a flowchart of the application control processing.
FIG. 13 is a flowchart of the ATC recovery processing.
FIG. 14 is a flowchart showing the continuation of FIG. 13.
FIG. 15 is a flowchart of the YM-axis recovery processing.
FIG. 16 is a flowchart of the YZM-axis recovery processing.
FIG. 17 is a flowchart of the axis return destination determination processing.
FIG. 18 is a diagram showing the recovery region W1.
FIG. 19 is a diagram showing the recovery region W2.
FIG. 20 is a diagram showing the recovery region W3.
FIG. 21 is a diagram showing the recovery regions W4 and W5.
FIG. 22 is a diagram showing the recovery region W6.
FIG. 23 is a diagram showing the axis return screen 81.
FIG. 24 is an image diagram showing the movement path (1) from point M1 and the position (2) of the magazine.
FIG. 25 is a diagram showing the Y-axis recovery screen 82.
FIG. 26 is an image diagram showing the movement path (1) from point M2 and the position (2) of the magazine.
FIG. 27 is a diagram showing the YM-axis recovery screen 83 (in the case where the rotation deviation is below the threshold).
FIG. 28 is a diagram showing the YM-axis recovery screen 83 (in the case where the rotation deviation is at or above the threshold).
FIG. 29 is an image diagram showing the movement path (1) from point M3 and the position (2) of the magazine.
FIG. 30 is a diagram showing the YZ-axis recovery screen 84.
FIG. 31 is an image diagram showing the movement path (1) from point M4 and the position (2) of the magazine.
FIG. 32 is a diagram showing the YZM-axis recovery screen 85 (in the case where the rotation deviation is below the threshold).
FIG. 33 is a diagram showing the YZM-axis recovery screen 85 (in the case where the rotation deviation is at or above the threshold).
FIG. 34 is an image diagram showing the movement path (1) from the ATC origin and the position (2) of the magazine.
FIG. 35 is an image diagram showing the movement path (1) from point M6 and the position (2) of the magazine.
FIG. 36 is a diagram showing the YZM-axis recovery screen 86 (in the case where the rotation deviation is below the threshold).
FIG. 37 is a diagram showing the YZM-axis recovery screen 86 (in the case where the rotation deviation is at or above the threshold).
FIG. 38 is an image diagram showing the position of point M7.
FIG. 39 is a diagram showing the unrecoverable screen 87.
FIG. 40 is a diagram showing the index tool confirmation screen 88.
FIG. 41 is a diagram showing the end screen 89.
FIG. 42 is a flowchart of the YM-axis recovery processing (modification example).
FIG. 43 is a diagram showing the configuration of the numerical value control system 200 (modification example).

### DESCRIPTION OF EMBODIMENTS

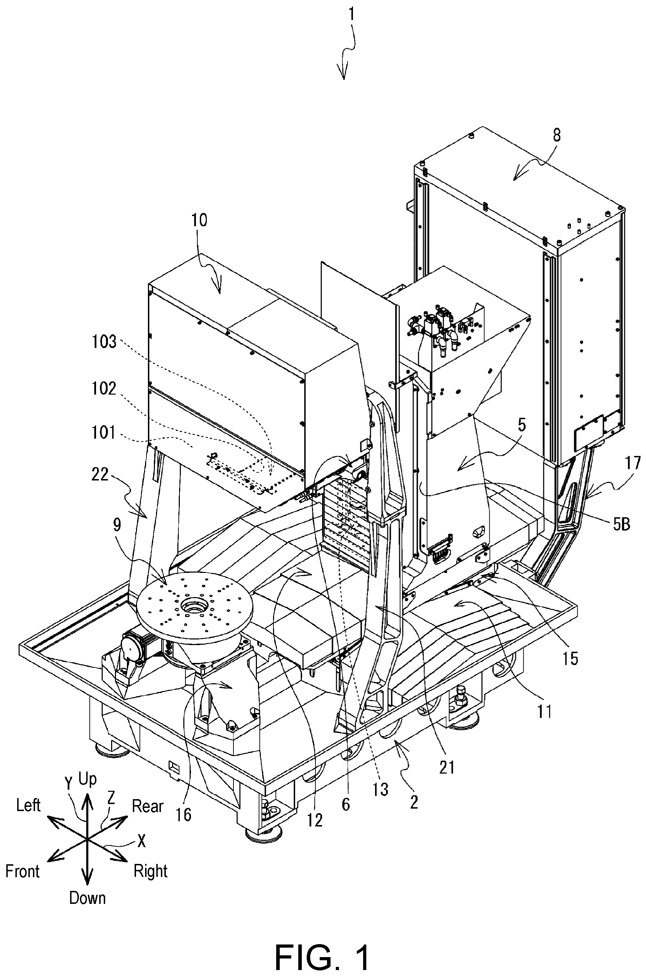

An embodiment of the present invention will be described. In the following description, arrows in the figures are used to indicate left and right, up and down, and front and rear. The left-right direction, up-down direction, and front-rear direction of a machine tool 1 correspond to an X-axis direction, a Y-axis direction, and a Z-axis direction of the machine tool 1, respectively. The machine tool 1 shown in FIG. 1 is a horizontal machining center in which a main shaft 7 extends in the front-rear direction (Z-axis direction). "ATC" recited in the embodiment is an abbreviation for "Automatic Tool Changer". In addition, "NC" recited in the embodiment is an abbreviation for "Numerical Control".

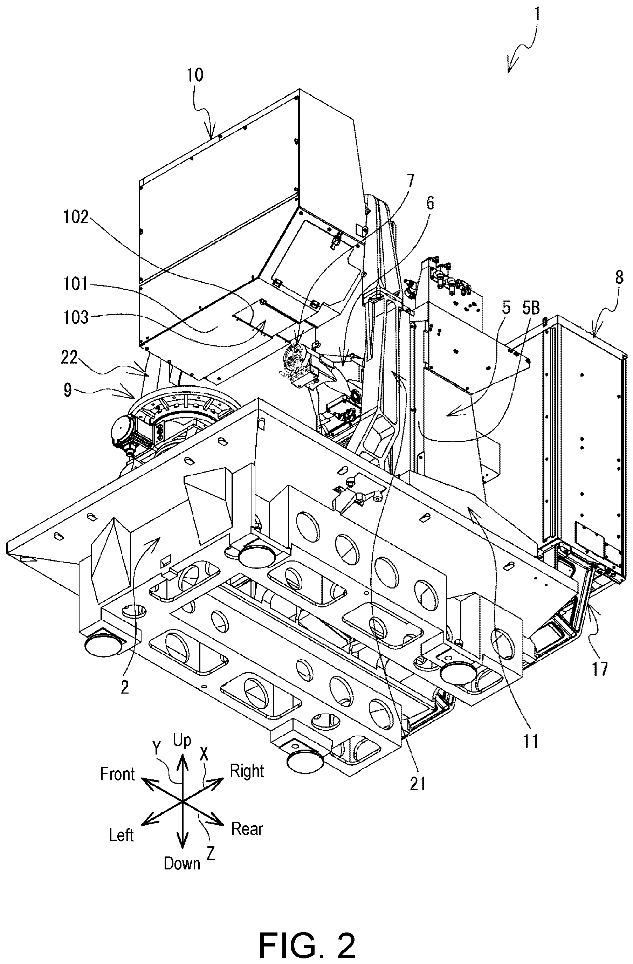

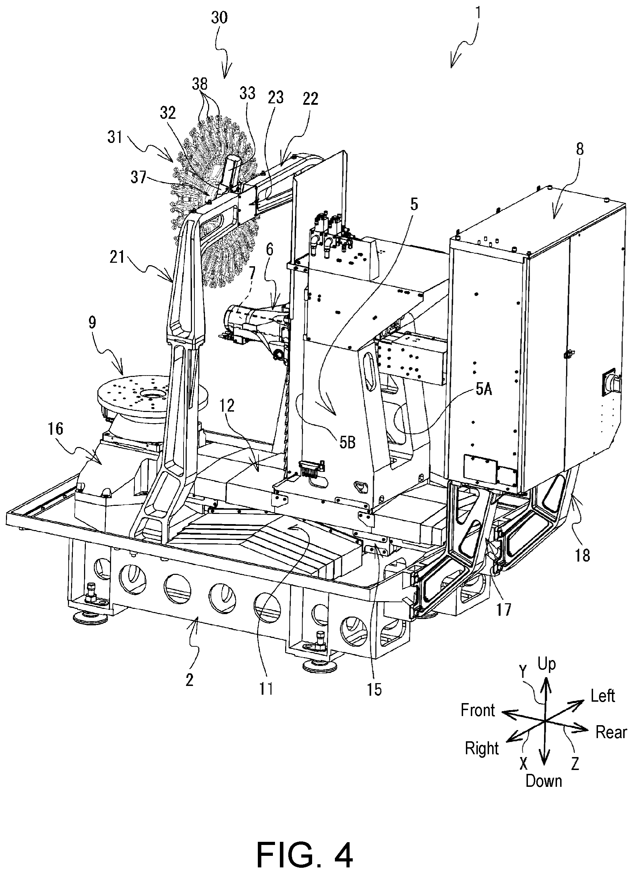

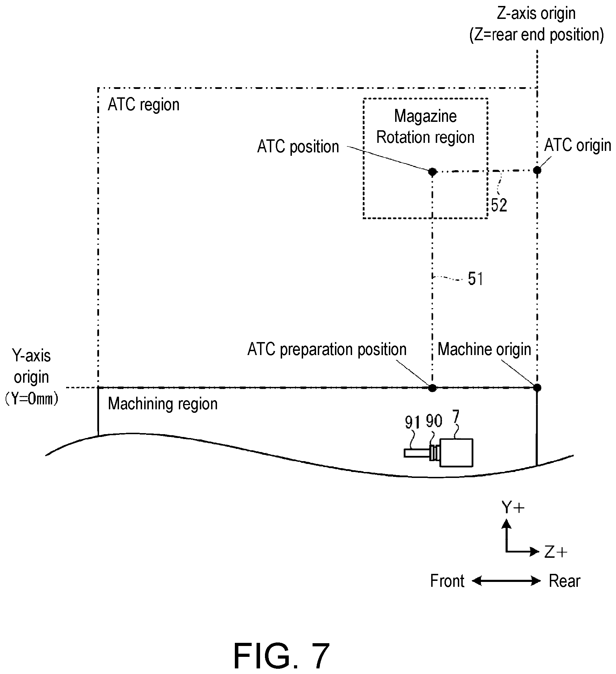

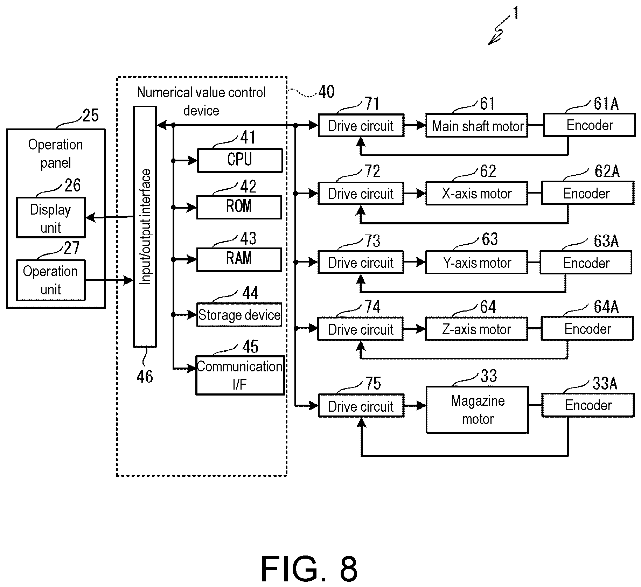

Referring to FIGS. 1 to 4, the structure of the machine tool 1 is described. As shown in FIGS. 1 and 2, the machine tool 1 includes a base 2, a column 5, a main shaft head 6, the main shaft 7, a control box 8, a rotating table 9, an X-axis movement mechanism 11, a Z-axis movement mechanism 12, a Y-axis movement mechanism 13, a tool exchange device 30 (refer to FIG. 4, hereinafter referred to as "ATC device 30"), a magazine cover 10, and others. The base 2 is an iron foundation with a roughly rectangular shape in plan view, elongated in the Z-axis direction. The X-axis movement mechanism 11 is provided at the rear of the upper surface of the base 2, and supports a carriage 15 movably in the X-axis direction by the power of an X-axis motor 62 (refer to FIG. 8). The Z-axis movement mechanism 12 is provided on the upper surface of the carriage 15, and supports the column 5 movably in the Z-axis direction by the power of a Z-axis motor 64 (refer to FIG. 8). The column 5 is a standing pillar extending in the up-down direction. The Y-axis movement mechanism 13 is provided on a front surface 5B of the column 5, and supports the main shaft head 6 movably along the front surface 5B of the column 5 in the Y-axis direction by the power of a Y-axis motor 63 (refer to FIG. 8). As a result, the main shaft head 6 is able to move in three axial directions: X-axis, Y-axis, and Z-axis. The main shaft head 6 extends in the Z-axis direction. The main shaft 7 is provided in the main shaft head 6 and extends coaxially with the main shaft head 6 in the Z-axis direction. The main shaft head 6 includes the main shaft 7 at the front and supports the main shaft 7 rotatably. The main shaft head 6 includes a main shaft motor 61 (refer to FIG. 8). The output shaft (not shown) of the main shaft motor 61 is connected coaxially with the main shaft 7 via a coupling (not shown). A tool holder 90 holding a tool 91 is attached to the tip unit of the main shaft 7 (refer to FIG. 7). For convenience of description, in the following description, there are places where it is expressed as "the tool 91 is attached to the tip unit of the main shaft 7", but the meaning is the same.

As shown in FIG. 4, a pair of support members 17 and 18 are provided at the rear unit of the base 2. The support members 17 and 18 are spaced apart from each other in the left-right direction and extend upward from the rear unit of the base 2, supporting the control box 8 from below. The control box 8 houses a numerical value control device 40 (refer to FIG. 8) inside. The numerical value control device 40 controls the operation of the machine tool 1. A fixed platform 16 is provided on the front side of the upper surface of the base 2. The rotating table 9 is installed on the fixed platform 16 and is disposed in front of the main shaft head 6. A workpiece (not shown) is fixed with a jig (not shown) on the upper surface of the rotating table 9. The rotating table 9 is able to rotate 360° and be positioned around a rotation axis parallel to the Y-axis. The machine tool 1 performs cutting processing on the workpiece fixed on the rotating table 9 by bringing the tool 91 attached to the main shaft 7 into contact from the three axial directions of X-axis, Y-axis, and Z-axis.

On the front side and on both left and right sides of the upper surface of the base 2, a pair of support columns 21 and 22 are provided. The support column 21 extends upward from the right side of the upper surface of the base 2 and bends approximately 90° to the left at the upper unit thereof. The support column 22 extends upward from the left side of the upper surface of the base 2 and bends approximately 90° to the right at the upper unit thereof. A connecting plate 23 is fixed between the respective upper units of the support columns 21 and 22 that face each other.

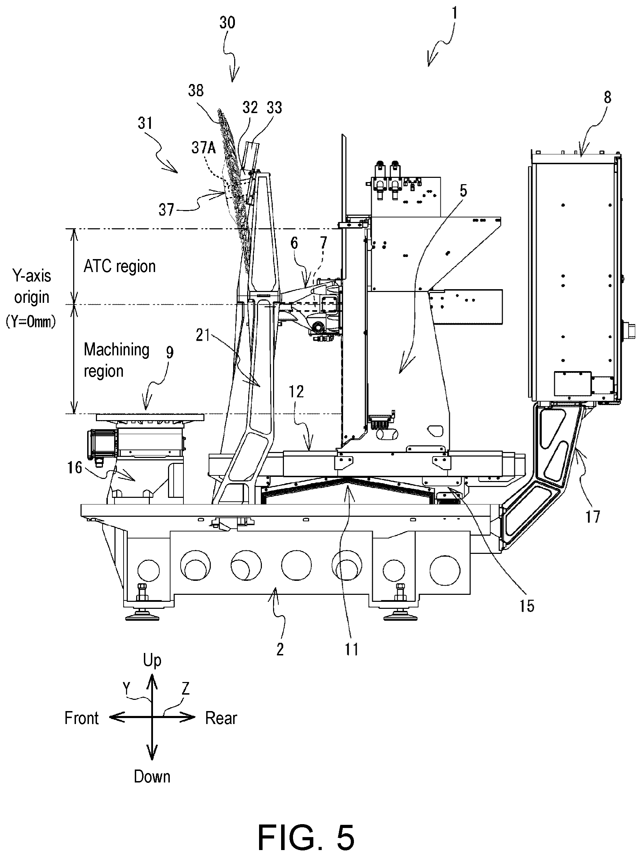

The ATC device 30 is fixed to the front of the connecting plate 23 and is supported above the main shaft head 6. The ATC device 30 includes a magazine 31, a reduction gear 32, a magazine motor 33, and the like. The magazine 31 includes a magazine base 37 and multiple grip arms 38. The magazine base 37 is approximately disc-shaped and is rotatably supported on the front of the connecting plate 23 around a pivot shaft 37A (refer to FIG. 5). The pivot shaft 37A is slightly inclined downward towards the front with respect to the Z-axis direction. The reduction gear 32 and the magazine motor 33 are attached to the magazine base 37. The output shaft (not shown) of the magazine motor 33 is connected to the pivot shaft 37A via the reduction gear 32. As a result, the power of the magazine motor 33 is transmitted to the pivot shaft 37A of the magazine base 37 via the reduction gear 32. The grip arms 38 are arranged along the outer periphery of the magazine base 37 and extend radially outward in the radial direction. The tip unit of the grip arm 38 grips the tool holder 90 from a direction perpendicular to the tool holder 90, with the tool holder 90 in a horizontally laid position. The lowermost position of the magazine 31 is the tool transfer position (an example of the "index position" of the present invention). The grip arm 38 indexed to the tool transfer position transfers a tool to and from the main shaft 7.

The magazine cover 10 is fixed to the front of the upper unit of each of the support columns 21 and 22. The magazine cover 10 is box-shaped and covers the periphery of the magazine 31. The magazine cover 10 reduces the adhesion of chips and cutting fluid spray to the magazine 31. A rectangular opening 102 is provided in a bottom wall 101 of the magazine cover 10. The opening 102 is located directly below the tool transfer position of the magazine 31. A magazine shutter 103 (hereinafter referred to as "shutter 103") is provided in the opening 102. The shutter 103 opens and closes the opening 102 under the control of a CPU 41 of a control panel.

A cover (not shown) is attached to the machine tool 1. The cover surrounds the periphery of the machine tool 1 and prevents the scattering of chips and coolant spray generated during cutting processing. An opening (not shown) for loading and unloading a workpiece and other purposes is provided on the front of the cover, along with a door (not shown) for opening and closing this opening. An operation panel 25 (refer to FIG. 8) is provided next to the opening. The user performs various inputs and operations for the machine tool 1 using the operation panel 25.

As shown in FIG. 5, the machine tool 1 includes a machining region and a tool exchange region (hereinafter referred to as "ATC region") provided side by side in the Y-axis direction. The machining region is provided in the space on the base 2 side (lower side) of the Y-axis origin. The Y-axis origin is the position at which the Y-axis machine coordinate is 0 (Y=0mm). The machining region is a region in which machining of the workpiece fixed on the upper surface of the rotating table 9 is performed. The ATC region is the space on the opposite side (upper side) of the machining region with respect to the Y-axis origin, and is provided in a position overlapping with the machining region in the Z-axis direction. The ATC region is a region in which tool exchange of the main shaft 7 is performed by the ATC device 30. The machine tool 1 can move the main shaft 7 to both the machining region and the ATC region by moving the main shaft head 6 up and down.

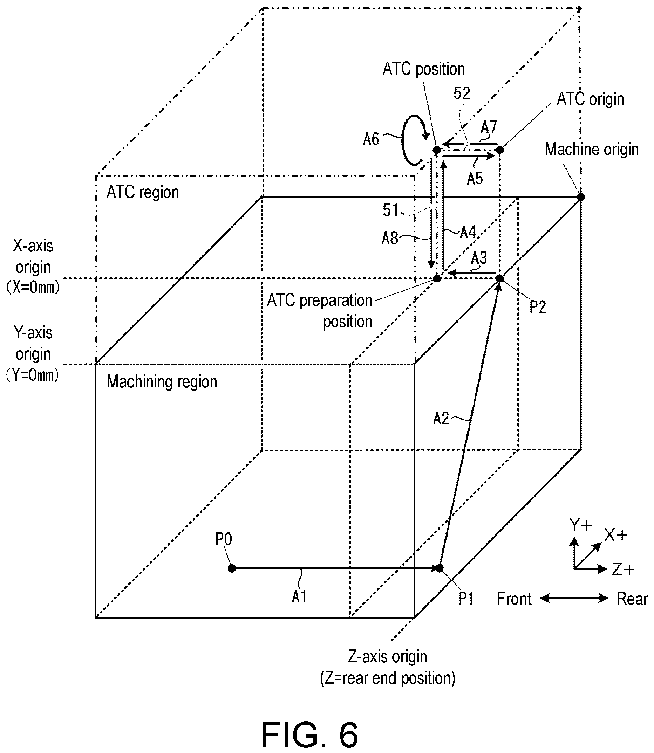

Referring to FIGS. 6 and 7, the machine origin and multiple reference points provided in the ATC region will be described. In FIG. 7, in order to show the orientation of the main shaft 7, the main shaft head 6 is omitted, and the main shaft 7, the tool holder 90, and the tool 91 are illustrated in a simplified manner. The machine origin of the machine tool 1 is at the position at which the machine coordinates of both the X-axis and Y-axis are 0, and the machine coordinate of the Z-axis is at the rear end position of the machining region, which is determined according to the structure of the machine tool 1. The machine origin of the X-axis is the X-axis origin (X=0mm), the machine origin of the Y-axis is the Y-axis origin (Y=0mm), and the machine origin of the Z-axis is the Z-axis origin (Z=rear end position). In addition, since the position of the machine origin changes depending on the structure of the machine tool 1, the sizes of the machining region and the ATC region set based on the machine origin also change depending on the structure of the machine tool 1.

In the ATC region, the tool exchange position (hereinafter referred to as "ATC position"), an ATC origin, and an ATC preparation position are provided. The ATC position, the ATC origin, and the ATC preparation position are reference points for moving and positioning the main shaft 7 when the tool exchange operation (hereinafter referred to as "ATC operation") is performed. The ATC position is the position at which a tool is transferred to and from the grip arm 38 indexed to the tool transfer position of the magazine 31. The ATC origin is a position moved in the Z-axis + direction (backward) from the ATC position, and is the rear end position of the ATC region. The ATC origin is a position at which the magazine 31 is able to rotate without interference between the tool gripped by the grip arm 38 and the main shaft 7. The ATC preparation position is a position moved in the Y-axis - direction (downward) from the ATC position, and is the boundary position between the machining region and the ATC region. The ATC preparation position is at the same coordinate position as the ATC position in the Z-axis direction.

Based on the above three reference points, tool exchange paths 51 and 52 are provided in the ATC region. The tool exchange paths 51 and 52 form an inverted L-shaped path. The tool exchange path 51 is a path extending in the Y-axis + direction (upward) from the ATC preparation position to the ATC position. The tool exchange path 52 is a path extending in the Z-axis + direction (backward) from the ATC position to the ATC origin. The tool exchange paths 51 and 52 are paths along which the main shaft head 6 moves during ATC operation. In the embodiment, in principle, in the ATC region, the operation of the main shaft 7 is restricted so that the main shaft 7 is merely able to move along the tool exchange paths 51 and 52 and is unable to move anywhere else.

As shown in FIG. 7, a magazine rotation region is provided around the ATC position. The magazine rotation region is a region in which the grip arm 38 of the magazine 31 rotates around the pivot shaft 37A. The magazine rotation region may be a region including the tool holder 90 and the tool 91 gripped by the grip arm 38. In the Z-axis direction, the coordinate position of the rear end of the magazine rotation region is located between the ATC position and the ATC origin. In the Y-axis direction, the coordinate position of the lower end of the magazine rotation region is located between the ATC position and the ATC preparation position. When at least a part of the main shaft 7 is positioned within the magazine rotation region, the main shaft 7 may be prone to interference with the grip arm 38, the tool holder 90, and the tool 91. In the embodiment, when the Z-axis of the main shaft 7 is retracted to the ATC origin on the tool exchange path 52, the main shaft 7 move out of the magazine rotation region. In addition, when the Y-axis of the main shaft 7 is lowered to the ATC preparation position on the tool exchange path 51, the main shaft 7 moves out of the magazine rotation region.

Referring to FIG. 6, an example of the ATC operation of the machine tool 1 is described. In the embodiment, in order to describe the position of the main shaft 7 during the ATC operation, the movement of the main shaft head 6 is expressed and described as "movement of the main shaft 7". In addition, in the following description, the ATC position in the X-axis is referred to as the ATC position X-axis, the ATC position in the Y-axis is referred to as the ATC position Y-axis, and the ATC position in the Z-axis is referred to as the ATC position Z-axis.

During workpiece machining, the main shaft 7 is positioned at, for example, P0 within the machining region. At this time, the shutter 103 of the magazine cover 10 is in a closed state (refer to FIG. 2). The tool holder 90 holding the tool 91 is attached to the main shaft 7 (refer to FIG. 7). A clamp mechanism (not shown) provided inside the main shaft 7 fixes the tool holder 90 attached to the main shaft 7.

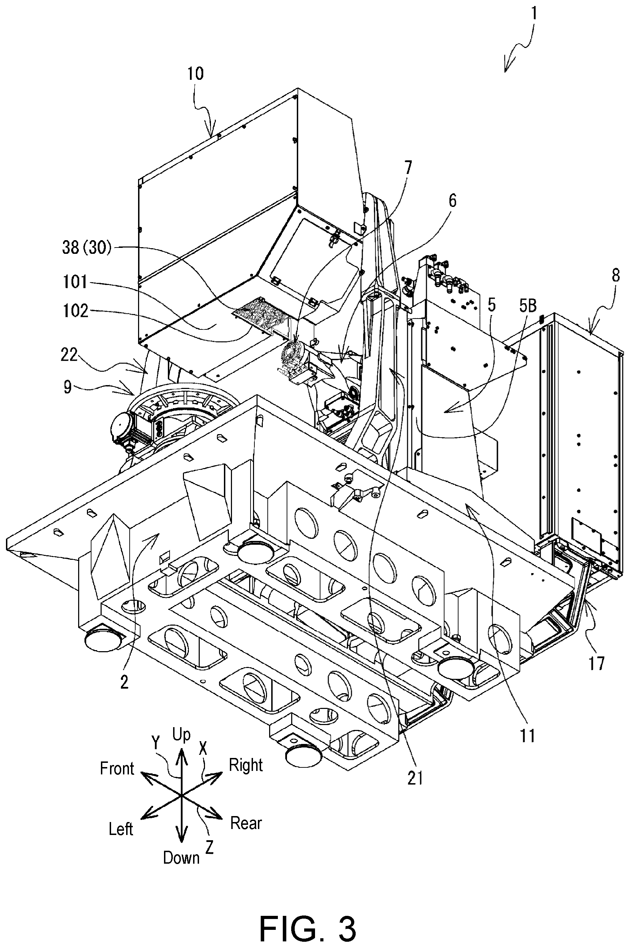

The machine tool 1 performs the orient operation of the main shaft 7 while retracting the Z-axis of the main shaft 7 positioned at P0 towards the Z-axis origin (refer to arrow A1 in FIG. 6). The orient operation is an operation to return the angle of the main shaft 7 to a reference position (for example, 0 degrees). The main shaft 7 reaches P1. Next, the shutter 103 of the magazine cover 100 is opened (refer to FIG. 3), and the X-axis of the main shaft 7 positioned at P1 is moved to the ATC position X-axis while the Y-axis is moved to the Y-axis origin (Y=0mm) (refer to arrow A2 in FIG. 6). The main shaft 7 reaches P2. Next, the Z-axis of the main shaft 7 positioned at P2 is advanced to the ATC position Z-axis (refer to arrow A3 in FIG. 6). The main shaft 7 reaches the ATC preparation position.

Next, the main shaft 7 is raised from the ATC preparation position along the tool exchange path 51 (refer to arrow A4 in FIG. 6). At this time, via the opening 102 of the magazine cover 100, the grip arm 38 indexed to the tool transfer position is exposed downward. As the main shaft 7 rises, the tool holder 90 attached to the main shaft 7 passes through the opening 102 and is pushed from below towards the grip arm 38. When the main shaft 7 reaches the ATC position, the tool holder 90 attached to the main shaft 7 engages with and is gripped by the grip arm 38. At the same time, the clamp mechanism inside the main shaft 7 releases the fixation of the tool holder 90. With this, the tool holder 90 becomes removable from the main shaft 7.

The machine tool 1, with the grip arm 38 holding the tool holder 90 attached to the main shaft 7, retracts the main shaft 7 from the ATC position along the tool exchange path 52 (refer to arrow A5 in FIG. 6). When the main shaft 7 reaches the ATC origin, the tool holder 90 is removed from the main shaft 7. Next, the ATC device 30 rotates the magazine 31 and indexes the grip arm 38 holding the tool holder of the next tool to be attached (hereinafter referred to as "next tool") to the tool transfer position (refer to the rotating arrow A6 in FIG. 6). As a result, the tool holder of the next tool is disposed in front of the main shaft 7 in the Z-axis direction.

Next, the machine tool 1 advances the main shaft 7 from the ATC origin along the tool exchange path 52 (refer to arrow A7 in FIG. 6). As a result, the tool holder of the next tool is inserted into the main shaft 7. Upon reaching the ATC position, the tool holder of the next tool is attached to the main shaft 7. The clamp mechanism inside the main shaft 7 fixes the tool holder attached to the main shaft 7.

Next, the machine tool 1 lowers the main shaft 7 with the tool holder of the next tool attached from the ATC position along the tool exchange path 51, and positions the main shaft 7 at the ATC preparation position (refer to arrow A8 in FIG. 6). This completes the ATC operation of the main shaft 7. In order to continue workpiece machining, the machine tool 1 moves the main shaft 7 with the tool holder of the next tool attached from the ATC preparation position towards the next command point within the machining region. The command point is the target position to which the main shaft 7 is moved after the completion of the ATC operation, and may be set, for example, by a control command in the NC program.

In addition, in the above example, the Z-axis of the main shaft 7 positioned at P0 is retracted to the Z-axis origin. However, for example, point R (return point) may be set at which the tool 91 attached to the main shaft 7 does not contact the workpiece and jig on the rotating table 9, and the main shaft 7 may be retracted to the point R. In this case, the point R may be positioned more forward than the Z-axis origin.

Referring to FIG. 8, the electrical configuration of the machine tool 1 will be described. The machine tool 1 includes a numerical value control device 40, a main shaft motor 61, an X-axis motor 62, a Y-axis motor 63, a Z-axis motor 64, a magazine motor 33, drive circuits 71 to 75, encoders 61A, 62A, 63A, 64A, and 33A, an operation panel 25, and the like.

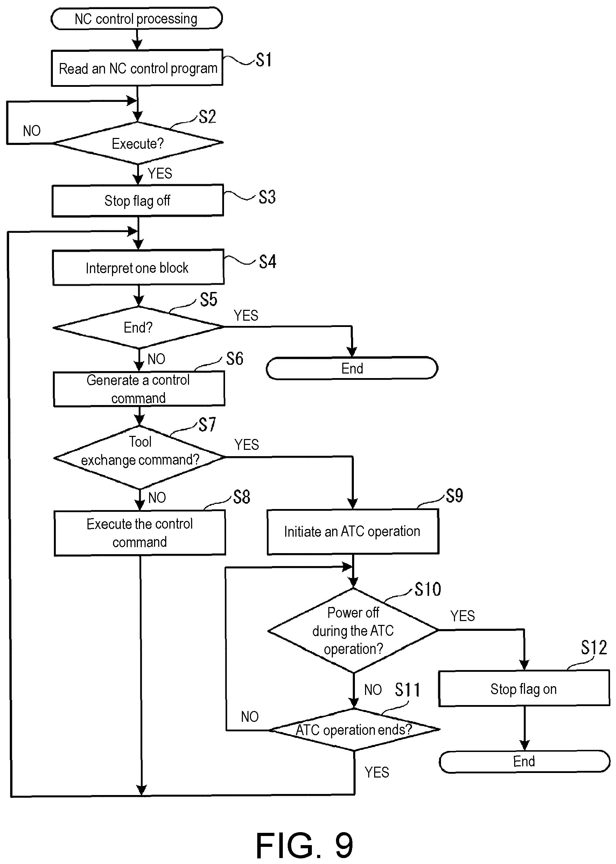

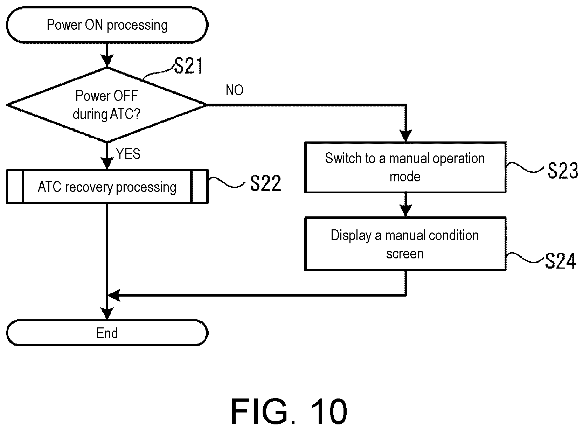

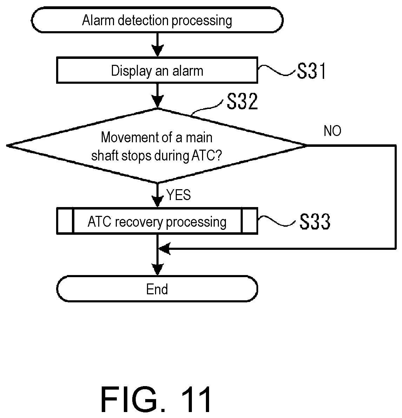

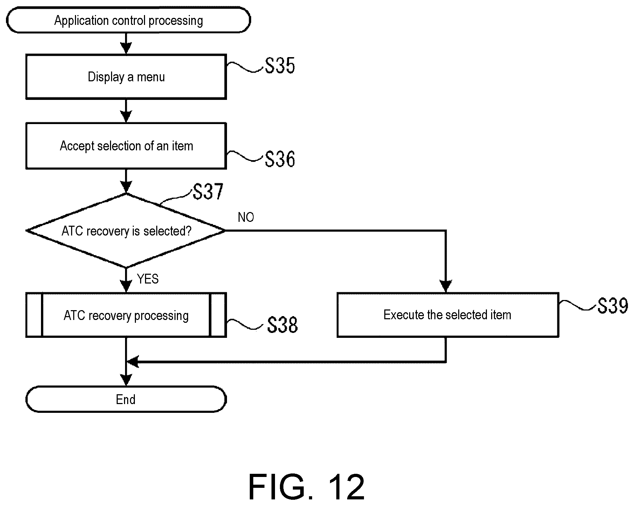

The numerical value control device 40 includes a CPU 41, a ROM 42, a RAM 43, a storage device 44, a communication I/F 45, an input/output interface 46, and the like. The CPU 41 comprehensively controls the operation of the machine tool 1. The ROM 42 stores various programs such as an NC control program, a power-on program, an alarm detection program, and an application control program. The NC control program executes the NC control processing (refer to FIG. 9) described later. The power-on program executes the power-on processing (refer to FIG. 10) described later. The alarm detection program executes the alarm detection processing (refer to FIG. 11) described later. The application control program executes the application control processing (refer to FIG. 12) described later. The programs may be stored in storage media other than the ROM 42, for example, the programs may be stored in the storage device 44. The RAM 43 stores various data during the execution of various processing. The storage device 44 is a non-volatile memory and stores various data such as an NC program for machining a workpiece and the stop flag described later. The communication I/F 45 can be connected to a terminal (not shown) via wired or wireless connection. The input/output interface 46 connects to the operation panel 25 and the drive circuits 71 to 75.

The storage device 44 stores a number indicating an index position of the grip arm 38 (hereinafter referred to as an index number) in association with coordinates corresponding to the index position (hereinafter referred to as rotation position coordinates). By referring to the index position and the rotation position coordinates, the CPU 41 can index the grip arm 38 that grips the tool holder 90 holding any of the tools 91.

The main shaft motor 61, the X-axis motor 62, the Y-axis motor 63, the Z-axis motor 64, and the magazine motor 33 are servo motors. The drive circuit 71 controls the main shaft motor 61 based on a control signal from the CPU 41. The drive circuit 72 controls the X-axis motor 62 based on a control signal from the CPU 41. The drive circuit 73 controls the Y-axis motor 63 based on a control signal from the CPU 41. The drive circuit 74 controls the Z-axis motor 64 based on a control signal from the CPU 41. The drive circuit 75 controls the magazine motor 33 based on a control signal from the CPU 41.

The encoder 61A detects the rotation position of the main shaft motor 61 and transmits the detection signal to the drive circuit 71. The drive circuit 71 performs feedback control of the main shaft motor 61 based on the detection signal. The CPU 41 receives the detection signal of the encoder 61A from the drive circuit 71 and detects the rotation position of the main shaft by converting the received detection signal into rotation coordinates of the main shaft 7. The encoder 62A detects the rotation position of the X-axis motor 62 and transmits the detection signal to the drive circuit 72. The drive circuit 72 performs feedback control of the X-axis motor 62 based on the detection signal. The CPU 41 receives the detection signal of the encoder 62A from the drive circuit 72 and detects the X-axis position by converting the received detection signal into an X-axis coordinate position of the main shaft 7. The encoder 63A detects the rotation position of the Y-axis motor 63 and transmits the detection signal to the drive circuit 73. The drive circuit 73 performs feedback control of the Y-axis motor 63 based on the detection signal. The CPU 41 receives the detection signal of the encoder 63A from the drive circuit 73 and detects the Y-axis position by converting the received detection signal into a Y-axis coordinate position of the main shaft 7. The encoder 64A detects the rotation position of the Z-axis motor 64 and transmits the detection signal to the drive circuit 74. The drive circuit 74 performs feedback control of the Z-axis motor 64 based on the detection signal. The CPU 41 receives the detection signal of the encoder 64A from the drive circuit 74 and detects the Z-axis position by converting the received detection signal into a Z-axis coordinate position of the main shaft 7. The encoder 33A detects the rotation position of the magazine motor 33 and transmits the detection signal to the drive circuit 75. The drive circuit 75 performs feedback control of the magazine motor 33 based on the detection signal. The CPU 41 detects the rotation position of the magazine 31 by converting the detection signal of the encoder 33A received from the drive circuit 75 into rotation position coordinates of the magazine 31. The operation panel 25 includes a display unit 26 and an operation unit 27. The display unit 26 is a touch panel that displays various information based on the control signal from the CPU 41 and accepts various inputs to transmit to the CPU 41. The operation unit 27, for example, includes multiple physical push keys (not shown) and accepts various operations to transmit to the CPU 41.

Referring to FIG. 9, the NC control processing is described. In response to a user selecting an NC program using the operation panel 25, the CPU 41 reads the NC control program from the ROM 42 and executes the processing. The CPU 41 reads the selected NC program from the storage device 44 (S1). The CPU 41 accepts the operation for executing the NC program by the user on the operation unit 27, and determines whether to execute the read NC program (S2). Until the execution operation is accepted (S2: NO), the CPU 41 returns to S2 and waits. In the case where the execution operation is accepted (S2: YES), the CPU 41 initializes the stop flag stored in the storage device 44 to 0 and turns the stop flag off (S3), and interprets the NC program from the beginning, one block at a time (S4).

The CPU 41 determines whether the interpreted block is an end command (S5). In the case where the interpreted block is not an end command (S5: NO), the CPU 41 generates a control command (internal command) based on the interpreted block (S6). The CPU 41 determines whether the generated control command is a tool exchange command (S7). In the case where the generated control command is a control command such as positioning (S7: NO), the CPU 41 executes the generated control command (S8). After executing the control command, the CPU 41 moves to the next block and returns to S4 to repeat the aforementioned processing.

In the case where the generated control command is a tool exchange command (S7: YES), the CPU 41 initiates the aforementioned ATC operation (S9). The CPU 41 determines whether the power is turned off during the ATC operation (S10). In the case where the power is turned off during the ATC operation (S10: YES), the CPU 41 sets the stop flag stored in the storage device 44 to 1 and turns the stop flag on (S12), and ends the processing. In the case where the power is not turned off during the ATC operation (S10: NO), the CPU 41 determines whether the ATC operation has ended (S11). Until the ATC operation ends (S11: NO), the CPU 41 returns to S10 and continues monitoring the power. In the case where the ATC operation has ended (S11: YES), the CPU 41 moves to the next block and returns to S4 to repeat the aforementioned processing. In the case where the interpreted block is an end command (S5: YES), the CPU 41 ends the processing.

Referring to FIG. 10, the power-on processing is described. In response to a user turning on the power using the operation panel 25, the CPU 41 reads the power-on program from the ROM 42 and executes the processing. The CPU 41 determines whether the power has been turned off during the ATC operation at the time of the previous power-on (S21). The CPU 41 refers to the stop flag stored in the storage device 44. In the case where the stop flag is 0, the power has not been turned off during the ATC operation (S21: NO), so the CPU 41 switches to a manual operation mode (S23), and displays a manual condition screen (not shown) on the display unit 26 of the operation panel 25 (S4). On the manual condition screen, various conditions can be set for manual operations of the movement and rotation of the main shaft 7. For example, a high-speed movement speed, a high-speed rotation speed, a constant speed movement speed, a low-speed rotation speed, a step movement amount, a step rotation amount, a main shaft rotation speed, and the like. The CPU 41 ends the processing.

In the case where the stop flag is 1, the power has been turned off during the ATC operation (S21: NO). In this case, as various servo motors are turned off during the ATC operation, the main shaft 7 is in a stopped state within the ATC region. In the case where an external force is applied to the main shaft 7 while the servo motors are turned off, the position of the main shaft 7 may shift in the X-axis direction, the Y-axis direction, or the Z-axis direction from the tool exchange paths 51 and 52. Moreover, the rotation position of the magazine 31 may shift in the circumferential direction. If an attempt is made to move the main shaft 7 in such an abnormal state, the positional relationship between the main shaft 7 and the grip arm 38 is shifted, so for example, the tool holder 90 attached to the main shaft 7 may not engage with the grip arm 38, and the clamp mechanism inside the main shaft 7 may release the fixation of the tool holder 90, potentially causing the tool holder 90 and the tool 91 to fall from the main shaft 7.

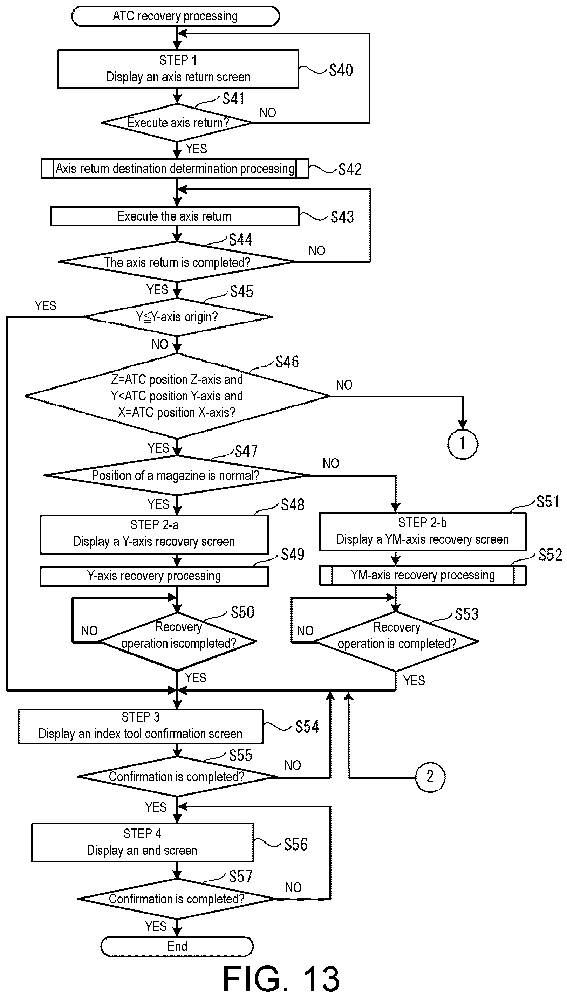

For such reasons, the user needs to manually restore the position of the main shaft 7 to the tool exchange paths 51 and 52, and return the position of the magazine 31 to the normal position thereof, but the recovery operation is difficult without skilled technique. The CPU 41 of the embodiment executes the ATC recovery processing (refer to FIG. 13 to 17) described later (S22) to provide guidance display for the recovery operation to the user. After the completion of the ATC recovery processing, the CPU 41 ends the processing.

Referring to FIG. 11, the alarm detection processing will be described. In the case where an alarm such as an emergency stop occurs during the operation of the machine tool 1, the CPU 41 reads the alarm detection program from the ROM 42 and executes the processing. The CPU 41 displays the alarm on the display unit 26 (S31) and notifies the user that an alarm has occurred. The CPU 41 determines whether the movement of the main shaft 7 has stopped during the ATC operation (S32). In the case where the movement of the main shaft 7 has not stopped during the ATC operation (S32: NO), the CPU 41 ends the processing. In the case where the movement of the main shaft 7 has stopped during the ATC operation (S32: YES), the CPU 41 executes the ATC recovery processing described later (S33) and ends the processing.

Referring to FIG. 12, the application control processing will be described. When the user selects a recovery support application using the operation unit 27 of the operation panel 25, the CPU 41 reads the application control program from the ROM 42 and executes the processing. The CPU 41 displays a menu on the display unit 26 (S35). The menu includes various items such as synchronous tap return, main shaft break-in operation, automatic door adjustment, position recovery, origin position adjustment, ATC recovery, and the like. The CPU 41 accepts the selection of an item from the menu (S36). The CPU 41 determines whether the ATC recovery item has been selected (S37). In the case where the ATC recovery item is selected (S37: YES), the CPU 41 executes the ATC recovery processing described later (S38) and ends the processing. In the case where an item other than ATC recovery is selected (S37: NO), the CPU 41 executes the selected item (S39) and ends the processing.

Referring to FIGS. 13 to 17, the ATC recovery processing will be described. In the embodiment, the grip arm 38 grips the tool holder 90 to which the tool 91 is integrally attached, but for the sake of description, there are places where it is expressed as "the grip arm 38 grips the tool 91". As shown in FIG. 13, the CPU 41 displays an axis return screen 81 on the display unit 26 (S40).

<STEP 1>

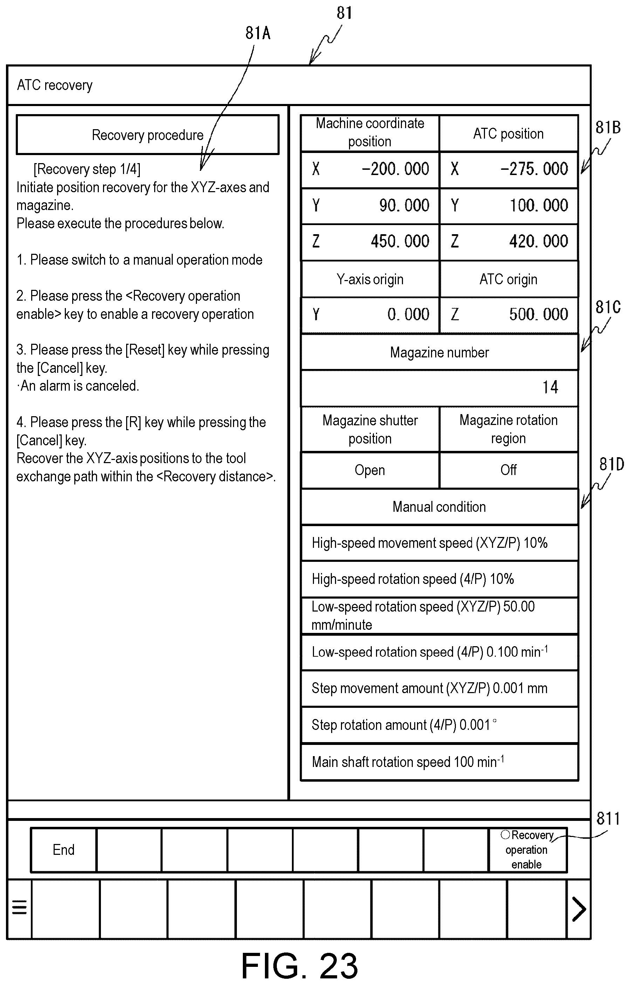

As shown in FIG. 23, the axis return screen 81 includes display regions 81A to 81D. The display region 81A displays the recovery procedure for STEP 1. STEP 1 is an axis return process. Axis return refers to the operation of returning the main shaft 7, which has stopped within the ATC region, to the tool exchange paths 51 and 52. The display region 81B displays coordinate information such as the machine coordinate position, the ATC position, the Y-axis origin, and the ATC origin position. The machine coordinate position is the current position information of the main shaft 7. The display region 81C displays the magazine number, the magazine shutter position, and the magazine rotation region. In the column of the magazine number, the magazine number corresponding to the grip arm 38 currently indexed at the tool transfer position of the magazine 31 is displayed. In the column of the magazine shutter position, the open/closed state of the shutter 103 is displayed. In the column of the magazine rotation region, "Off" is displayed if the position of the main shaft 7 is within the magazine rotation region, and "On" is displayed if the position of the main shaft 7 is outside the magazine rotation region. The display region 81D displays manual conditions. The manual conditions are the same as the manual condition items displayed on the aforementioned manual condition screen.

The display region 81A displays four procedures needed for axis return. First, as procedure 1, switch to the manual operation mode. As procedure 2, press a Recovery operation enable key 811 to enable the recovery operation. The Recovery operation enable key 811 is provided in the lower right of the axis return screen 81. As procedure 3, in the case where the servo motor is off, axis return is executed when the servo motor is turned on by pressing the [Reset] key while pressing the [Cancel] key on the operation unit 27. At this time, the alarm is cleared. As procedure 4, in the case where the servo motor is on, axis return is executed by pressing the [R] key while pressing the [Cancel] key on the operation unit 27. Note that the step is also performed if axis return has been performed in the step of procedure 3. The user may simply follow the recovery procedure displayed in the display region 81A to perform the operation.

Referring to FIG. 13 again, the CPU 41 determines whether to execute axis return or not (S41). Until procedure 3 or procedure 4 is performed, axis return is not executed (S41: NO), so the CPU 41 returns to S40 and waits. In the case where procedure 3 or procedure 4 is performed (S41: YES), in order to determine the axis return destination of the main shaft 7, the axis return destination determination processing is executed (S42).

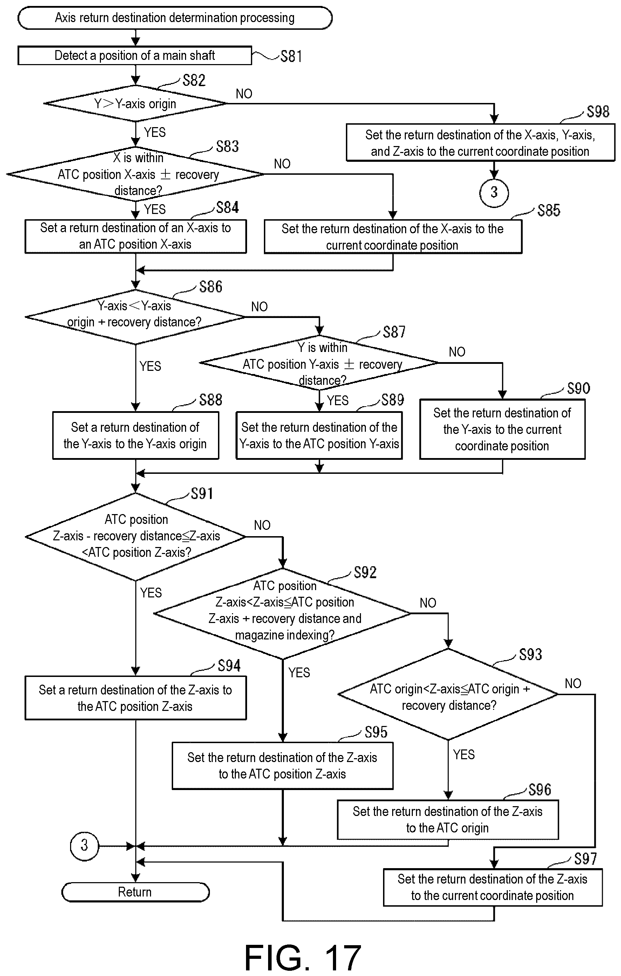

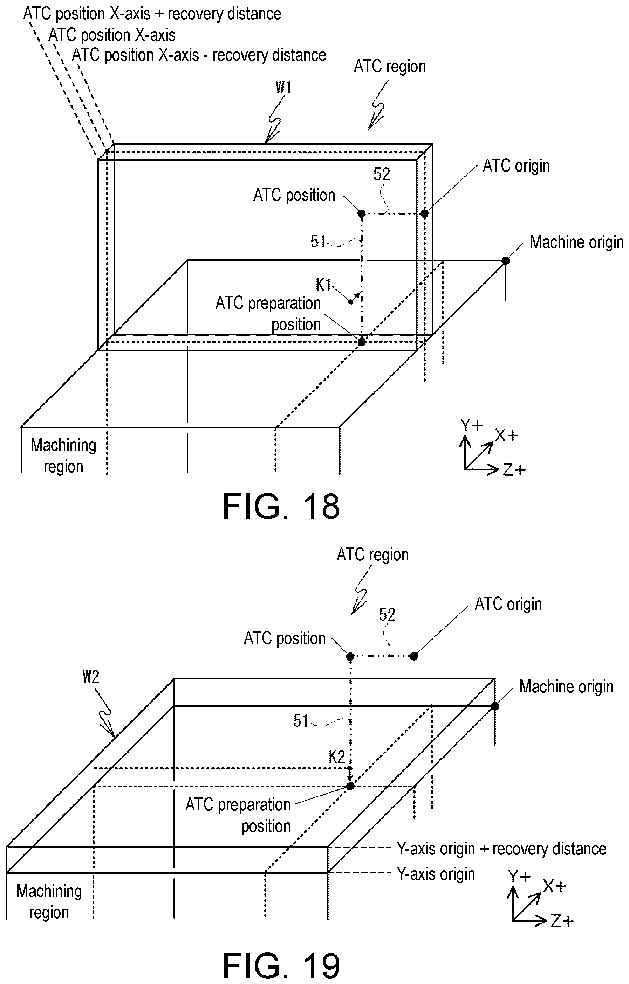

Referring to FIGS. 17 to 22, the axis return destination determination processing is described. Note that in FIGS. 18 to 22, the frame line indicating the range of the ATC region is omitted to make recovery regions W1 to W6, which will be described later, easier to see. As shown in FIG. 17, the CPU 41 detects the position of the main shaft 7 (S81). The position of the main shaft 7 is, for example, the position of the tip of the main shaft 7, which is the coordinate position of the X-axis, Y-axis, and Z-axis. The detected position of the main shaft 7 is temporarily stored in the RAM 43. The CPU 41 determines whether the Y-axis of the detected main shaft 7 is above the Y-axis origin or not (S82). In the case where the Y-axis is below or at the Y-axis origin (S82: NO), the main shaft 7 is within the machining region. In this case, even if the position of the main shaft 7 deviates from the command position, the need to correct the deviation is low, so the CPU 41 sets the return destination of the X-axis, Y-axis, and Z-axis of the main shaft 7 to the current coordinate position (S98). Instead of the processing of S98, for example, a coordinate position of the main shaft 7 immediately before servo off may be stored, and the return destination of the X-axis, Y-axis, and Z-axis of the main shaft 7 may be set to the coordinate position. Servo off means that the operation of servo motors such as the main shaft motor 61, the X-axis motor 62, the Y-axis motor 63, the Z-axis motor 64, and the magazine motor 33 is turned off. After setting the coordinate position in S98, the CPU 41 ends the processing and proceeds to S43 in the flow of FIG. 13.

In the case where the Y-axis is above the Y-axis origin (S82: YES), the main shaft 7 is within the ATC region, but the main shaft 7 may have deviated from the tool exchange paths 51 and 52. Therefore, it is determined for each of the X-axis, Y-axis, and Z-axis whether the current position of the main shaft 7 is within the recovery distance from the tool exchange paths 51 and 52.

The CPU **41** determines whether the X-axis of the main shaft 7 is within the ATC position X-axis ± recovery distance (S83). As shown in FIG. 18, a recovery region W1 is provided in the ATC region. The recovery region W1 is a space defined by the range of ATC position X-axis ± recovery distance. The recovery distance is, for example, a small distance that does not cause damage such as collision with other members even if the main shaft 7 is moved by the distance, and is about 2 mm, for example. For example, if the main shaft 7 stops at point K1, the X-axis of the point K1 is located within the recovery region W1 (S83: YES). In this case, the CPU 41 sets the return destination of the X-axis of the main shaft 7 to the ATC position X-axis (S84). It is preferable to temporarily store the return destination of the X-axis in the RAM 43. In the case where the X-axis of the main shaft 7 is located outside the recovery region W1 (S83: NO), the CPU 41 sets the return destination of the X-axis to the current coordinate position (S85).

Next, the CPU 41 determines whether the Y-axis of the main shaft 7 is below the Y-axis origin + recovery distance (S86). As shown in FIG. 19, a recovery region W2 is further provided in the ATC region. The recovery region W2 is a space defined by the range of Y-axis origin + recovery distance. For example, if the main shaft 7 stops at point K2, the Y-axis of the point K2 is located within the recovery region W2 (S86: YES). In this case, the CPU 41 sets the return destination of the Y-axis of the main shaft 7 to the Y-axis origin (S88).

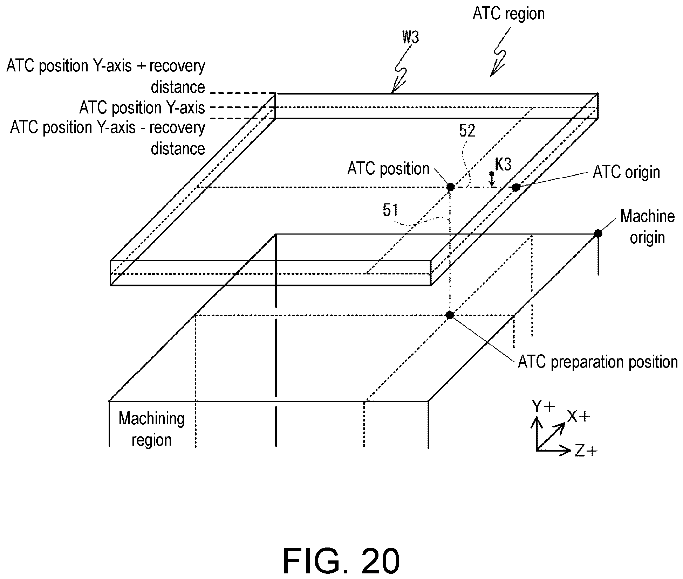

On the other hand, in the case where the Y-axis of the main shaft 7 is at or above the Y-axis origin + recovery distance (S86: NO), the CPU 41 determines whether the Y-axis of the main shaft 7 is within the ATC position Y-axis ± recovery distance (S87). As shown in FIG. 20, a recovery region W3 is further provided in the ATC region. The recovery region W3 is a space defined by the range of ATC position Y-axis ± recovery distance. For example, if the main shaft 7 stops at point K3, the Y-axis of the point K3 is located within the recovery region W3 (S87: YES). In this case, the CPU 41 sets the return destination of the Y-axis of the main shaft 7 to the ATC position Y-axis (S89). It is preferable to temporarily store the return destination of the Y-axis in the RAM 43. In the case where the Y-axis of the main shaft 7 is located outside the recovery region W3 (S87: NO), the CPU 41 sets the return destination of the Y-axis to the current coordinate position (S90).

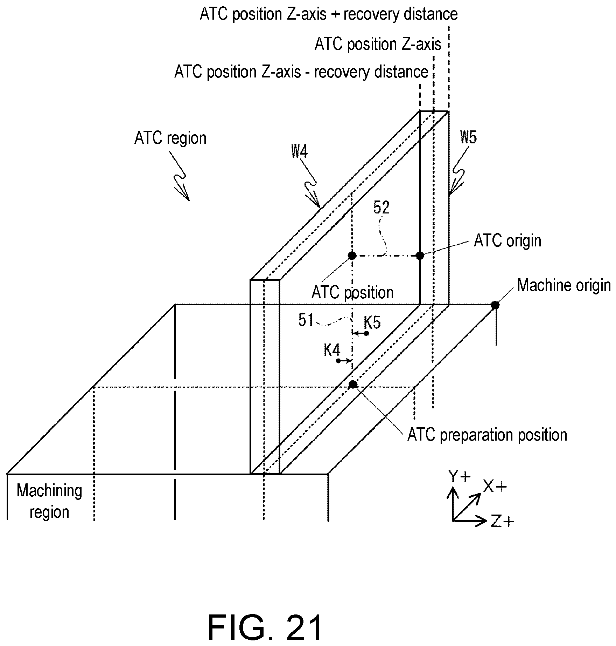

Next, the CPU 41 determines whether the Z-axis of the main shaft 7 is within the range of ATC position Z-axis - recovery distance ≦ Z-axis < ATC position Z-axis (S91). As shown in FIG. 21, a recovery region W4 is further provided in the ATC region. The recovery region W4 is a space defined by the range of ATC position Z-axis - recovery distance ≤ Z-axis < ATC position Z-axis. For example, if the main shaft 7 stops at point K4, the Z-axis of the point K4 is located within the recovery region W4 (S91: YES). In this case, the CPU 41 sets the return destination of the Z-axis of the main shaft 7 to the ATC position Z-axis (S94). On the other hand, in the case where the Z-axis of the main shaft 7 is outside the recovery region W4 (S91: NO), the CPU 41 determines whether the Z-axis of the main shaft 7 is within the range of ATC position Z-axis < Z-axis ≤ ATC position Z-axis + recovery distance and the magazine 31 is properly indexed (S92).

Regarding the determination in S92 of whether the magazine 31 is properly indexed, it is preferable for the CPU 41 to determine the determination based on whether a rotation deviation above a threshold has occurred in the magazine 31. The rotation deviation is a deviation in the circumferential direction around the pivot shaft 37A with respect to the reference coordinates of the magazine 31. The reference coordinates of the magazine 31 are the rotation position coordinates of the magazine 31 corresponding to the index position of the grip arm 38, which are stored in the storage device 44. The CPU 41 can convert the detection signal of the encoder 33A received from the drive circuit 75 into the rotation position coordinates of the magazine 31, and compare the rotation position coordinates with the reference coordinates stored in the storage device 44 to determine whether a rotation deviation above the threshold has occurred in the magazine 31. The CPU 41 can determine that the magazine 31 is in a properly indexed state if the rotation deviation is below the threshold, and that the magazine 31 is not in a properly indexed state if the rotation deviation is at or above the threshold.

As shown in FIG. 21, a recovery region W5 is further provided in the ATC region. The recovery region W5 is a space defined by the range of ATC position Z-axis < Z-axis ≤ ATC position Z-axis + recovery distance. For example, if the main shaft 7 stops at point K5, the Z-axis of the point K5 is located within the recovery region W5. In addition to this, in the case where the magazine 31 is properly indexed (S92: YES), the CPU 41 sets the return destination of the Z-axis of the main shaft 7 to the ATC position Z-axis (S94).

Moreover, in the case where the position of the Z-axis of the main shaft 7 is outside the recovery region W5 (S92: NO), the CPU 41 determines whether the Z-axis of the main shaft 7 is within the range of ATC origin < Z-axis ≦ ATC origin + recovery distance (S93). In addition, even if the Z-axis position is within the recovery region W5, if the magazine 31 is not in a properly indexed state (S92: NO), the position of the grip arm 38 is shifted in the Y-axis direction. In this state, when moving the Z-axis of the main shaft 7 to the ATC position Z-axis, the main shaft 7 may interfere with the tool holder 90 gripped by the grip arm 38. Therefore, in this case as well, the CPU 41 does not set the return destination of the Z-axis to the ATC position Z-axis, but instead determines whether the Z-axis of the main shaft 7 is within the range of ATC origin < Z-axis ≤ ATC origin + recovery distance (S93).

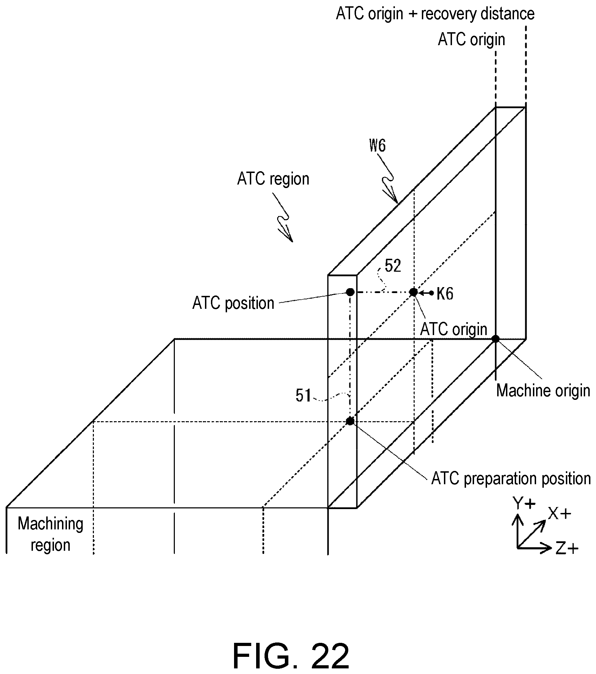

As shown in FIG. 22, a recovery region W6 is further provided in the ATC region. The recovery region W6 is a space defined by the range of ATC origin < Z-axis ≤ ATC origin + recovery distance. For example, if the main shaft 7 stops at point K6, the Z-axis of the point K6 is located within the recovery region W6 (S93: YES). In this case, the CPU 41 sets the return destination of the Z-axis of the main shaft 7 to the ATC origin (S96). It is preferable to temporarily store the return destination of the Z-axis in the RAM 43. In the case where the return destination of the Z-axis is set (S94, S95, and S96), the CPU 41 ends the processing and proceeds to S43 in the flow of FIG. 13. Furthermore, in the case where the Z-axis of the main shaft 7 is outside the recovery region W6 (S93: NO), as the Z-axis of the main shaft 7 is not within any of the recovery regions W4 to W6, the CPU 41 sets the return destination of the Z-axis to the current coordinate position (S97), ends the processing, and proceeds to S43 in the flow of FIG. 13.

Referring to the flow in FIG. 13 again, as the CPU 41 has completed the axis return destination determination processing of S42, the CPU 41 executes the axis return of the main shaft 7 according to the return destination set for each of the X-axis, Y-axis, and Z-axis in the aforementioned axis return destination determination processing (S43). The axis return for the X-axis, Y-axis, and Z-axis may be performed one axis at a time in sequence, or simultaneously for two or three axes. The order of execution is not specified. In addition, in the case where the return destination of the moving axis is set to the current coordinate position in each of the processing S85, S90, and S97 of the axis return destination determination processing in FIG. 17, in the axis return processing of S43 in FIG. 13, the CPU 41 does not move the main shaft 7 for the moving axis of which return destination is set to the current coordinate position. In other words, the CPU 41 restricts the movement of the main shaft 7.

The CPU 41 determines whether the axis return is completed or not (S44). Until the axis return is completed (S44: NO), the CPU 41 returns to S43 and continues execution. In the case where the axis return is completed (S44: YES), the CPU 41 determines whether the Y-axis of the main shaft 7 is at or below the Y-axis origin (S45). In the case where the Y-axis of the main shaft 7 is at or below the Y-axis origin (S45: YES), the main shaft 7 is already positioned in the machining region, so the CPU 41 proceeds to the processing of S54, which will be described later, without changing the position of the main shaft 7. In the case where the Y-axis is above the Y-axis origin (S45: NO), the main shaft 7 is positioned on the tool exchange paths 51 and 52 within the ATC region. Therefore, the CPU 41 needs to safely move the main shaft 7 towards the machining region according to the position of the main shaft 7 on the tool exchange paths 51 and 52.

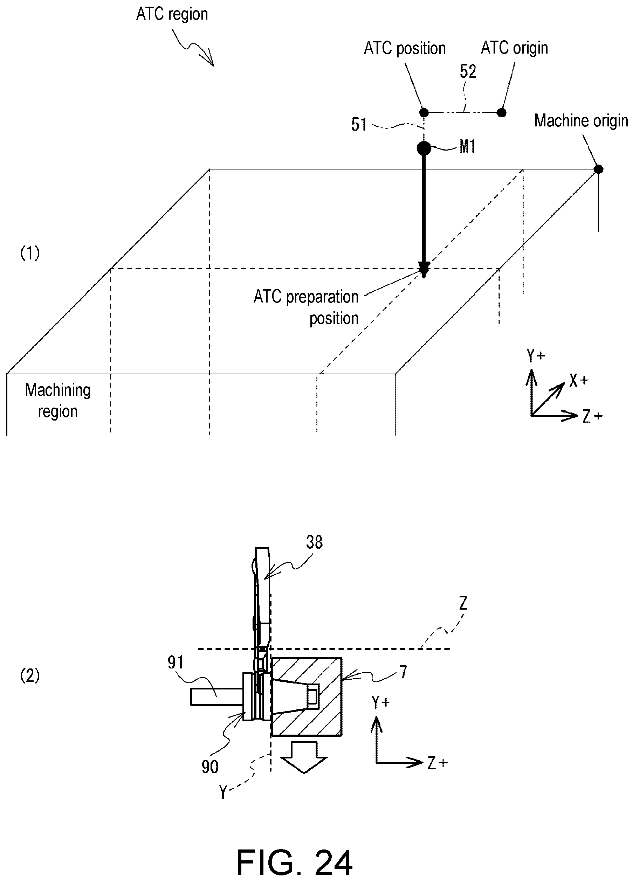

Therefore, the CPU 41 determines whether the position of the main shaft 7 satisfies the conditions Z = ATC position Z-axis and Y < ATC position Y-axis and X = ATC position X-axis (S46). For example, as shown in FIG. 24(1), the main shaft 7 is positioned at point M1. Since the point M1 is on the tool exchange path 51, it may be inferred that the main shaft 7 stopped while ascending or descending on the tool exchange path 51. As the point M1 satisfies the conditions Z = ATC position Z-axis and Y < ATC position Y-axis and X = ATC position X-axis (S46: YES), the CPU 41 determines whether the position of the magazine 31 is normal or not (S47). The method for determining whether the position of the magazine 31 is normal or not is the same as the method for determining whether the magazine 31 is properly indexed or not in the determination processing of S92 in FIG. 17.

For example, as shown in FIG. 24(2), in the case where the position of the magazine 31 is normal, the grip arm 38 indexed to the tool transfer position is disposed in a direction parallel to the Y-axis direction. The tool holder 90 and the tool 91 attached to the main shaft 7 extend in the Z-axis direction. In this state, the grip arm 38 is disposed in a positional relationship perpendicular to the tool holder 90. In this case, since the position of the magazine 31 is normal (S47: YES), the CPU 41 determines the recovery procedure for the main shaft 7 to be the operation pattern of STEP 2-a, which will be described later, and displays a Y-axis recovery screen 82 corresponding to the operation pattern on the display unit 26 (S48).

### <STEP 2-a>

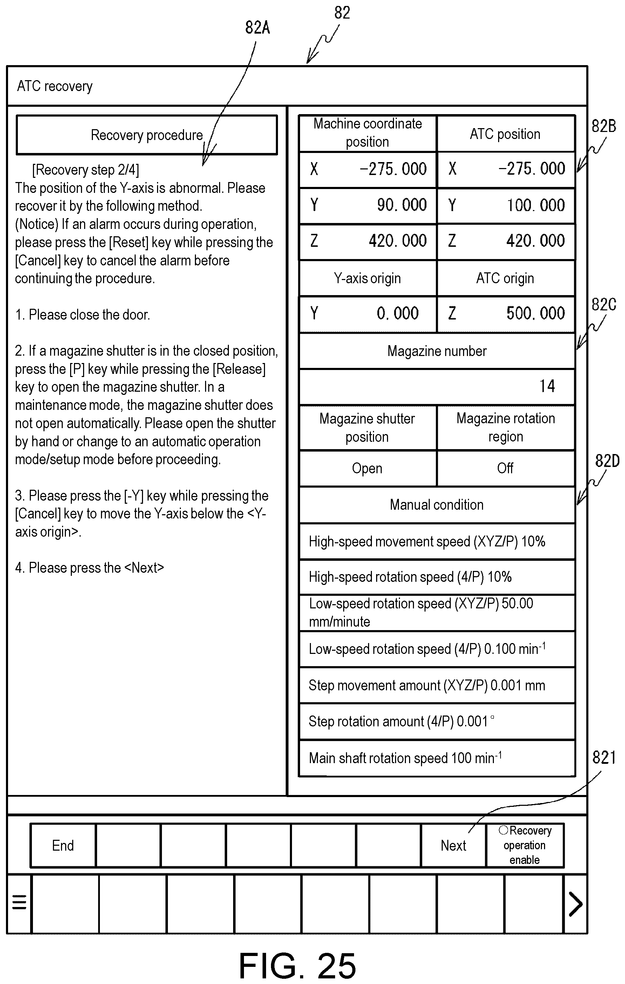

As shown in FIG. 25, the Y-axis recovery screen 82 includes display regions 82A to 82D. The recovery procedure for STEP 2-a is displayed in the display region 82A. STEP 2-a is an operation pattern in which the main shaft 7 on the tool exchange path 51 is lowered along the tool exchange path 51 to the machining region. The display regions 82B to 82D are the same as the display regions 81B to 81D of the axis return screen 81 shown in FIG. 23, so the description thereof is omitted.

In the display region 81A, a caution alert is provided indicating that the Y-axis position is abnormal, and that as a (Notice), in the case where an alarm occurs during operation, press the [Reset] key while pressing the [Cancel] key on the operation unit 27 to cancel the alarm before proceeding with the procedure. Below the caution alert, four procedures needed for STEP 2-a are displayed as guidance. First, as procedure 1, close the door of the cover of the machine tool 1. As procedure 2, if the shutter 103 is closed, press the [P] key while pressing the [Cancel] key on the operation unit 27 to open the shutter 103. In the case of a maintenance mode, since the shutter 103 does not open automatically, either open the shutter 103 by hand or change to a mode other than the maintenance mode (for example, an automatic operation mode or a setup mode) before opening the shutter 103. As procedure 3, press the [-Y] key while pressing the [Cancel] key on the operation unit 27 to move the Y-axis below the Y-axis origin. As procedure 4, press a Next key 821 after completing the recovery operations in procedures 1 to 3. The Next key 821 is displayed in the lower right of the Y-axis recovery screen 82.

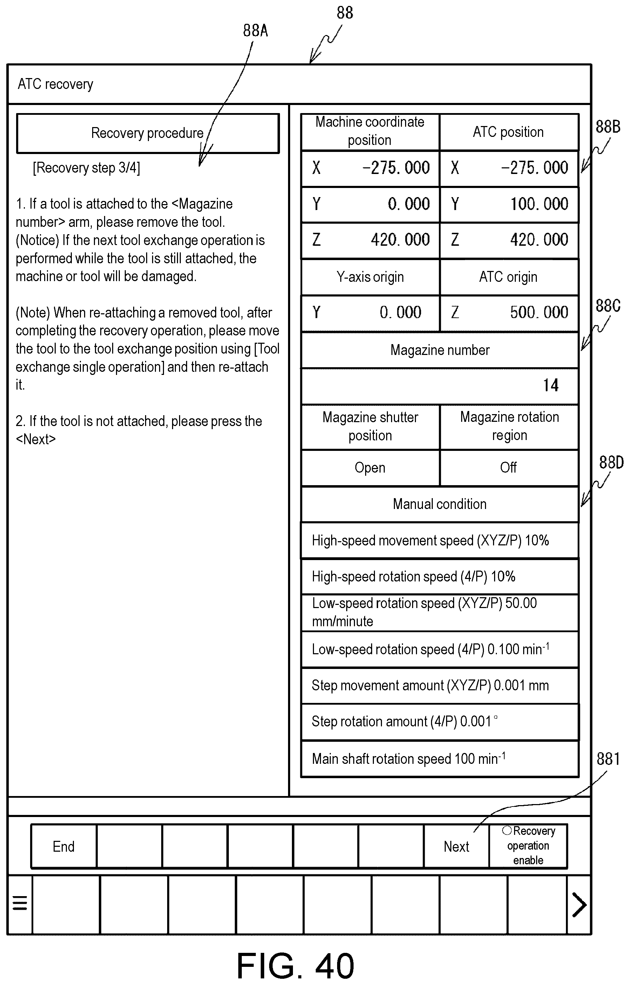

Referring to FIG. 13 again, the CPU 41 executes the Y-axis recovery processing according to the operations of procedures 1 to 3 by the user (S49). Through the Y-axis recovery processing, the main shaft 7 moves below the Y-axis origin. As a result, the CPU 41 can safely and appropriately recover the main shaft 7, which stopped within the ATC region, to the machining region along the tool exchange path 51. The CPU 41 determines whether the recovery operation is completed or not (S50). Since the recovery operation is not completed until the user presses the Next key 821 (S50: NO), the CPU 41 returns to S50 and waits. In the case where the Next key 821 is pressed, the recovery operation is completed (S50: YES), so the CPU 41 displays an index tool confirmation screen 88 (refer to FIG. 40), which will be described later, on the display unit 26 (S54).

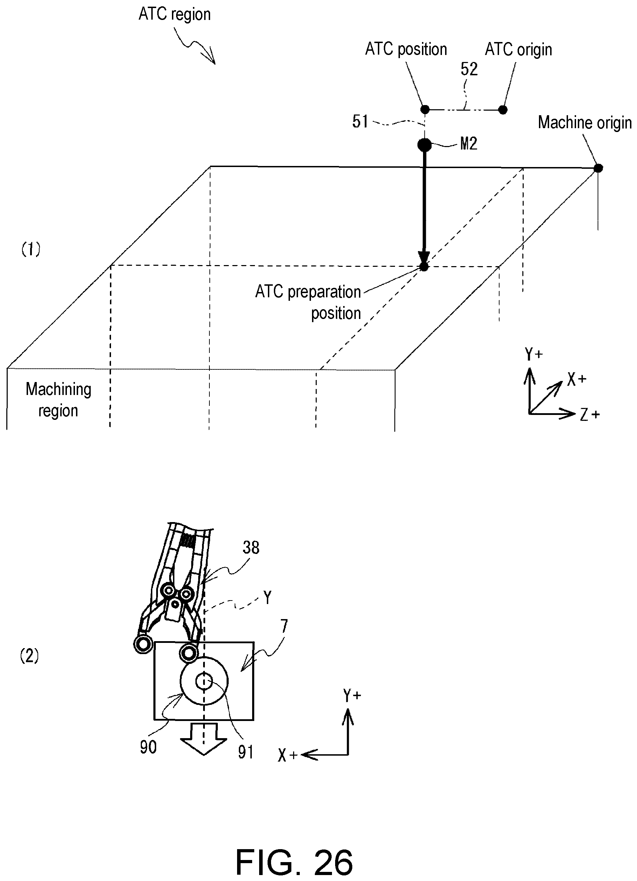

Moreover, regarding the position of the main shaft 7, even if the position satisfies the conditions of Z=ATC position Z-axis and Y<ATC position Y-axis and X=ATC position X-axis (S46: YES), in the case where the position of the magazine 31 is not normal (S47: NO), rotation deviation occurs. For example, as shown in FIG. 26(1), in the case where the main shaft 7 is positioned at point M2 on the tool exchange path 51, the main shaft 7 is below the ATC position. However, as shown in FIG. 26(2), if the position of the magazine 31 is shifted, the grip arm 38 indexed to the tool transfer position becomes shifted in the circumferential direction with respect to the Y-axis. In this state, if the grip arm 38 is returned to the normal position, the grip arm 38 may interfere with the tool holder 90 attached to the main shaft 7. In such a case, it is preferable to move the main shaft 7 in the Y-axis direction away from the magazine 31 with respect to the grip arm 38, and then return the magazine 31 to the normal position. Therefore, the CPU 41 determines the recovery procedure for the main shaft 7 to be the operation pattern of STEP 2-b described later, displays a YM-axis recovery screen 83 corresponding to the operation pattern on the display unit 26 (S51), and executes the YM-axis recovery processing (S52).

### <STEP 2-b>

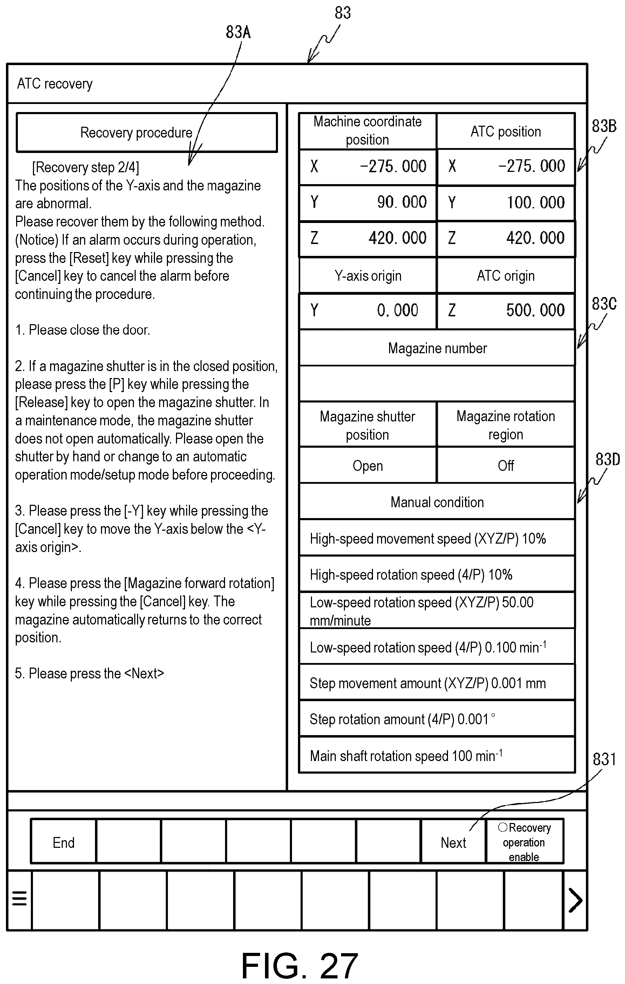

As shown in FIG. 27, the YM-axis recovery screen 83 includes display regions 83A to 83D. In the display region 83A, a caution alert is provided indicating that the positions of the Y-axis and the magazine 31 are abnormal, that recovery should be performed according to the following procedure, and that as a (Notice), in the case where an alarm occurs during operation, press the [Cancel] key while pressing the [Reset] key on the operation unit 27 to cancel the alarm before proceeding with the procedure. Below the caution alert, the recovery procedure for STEP 2-b is displayed as guidance. STEP 2-b is an operation pattern in which the main shaft 7 positioned on the tool exchange path 51 is lowered along the tool exchange path 51 to the machining region, and then the position of the magazine 31 is returned to normal. The display regions 83B to 83D are the same as the display regions 81B to 81D of the axis return screen 81 shown in FIG. 23, so the description thereof is omitted. In STEP 2-b, since the position of the magazine 31 is shifted, the magazine number is not displayed in the display region 83C.

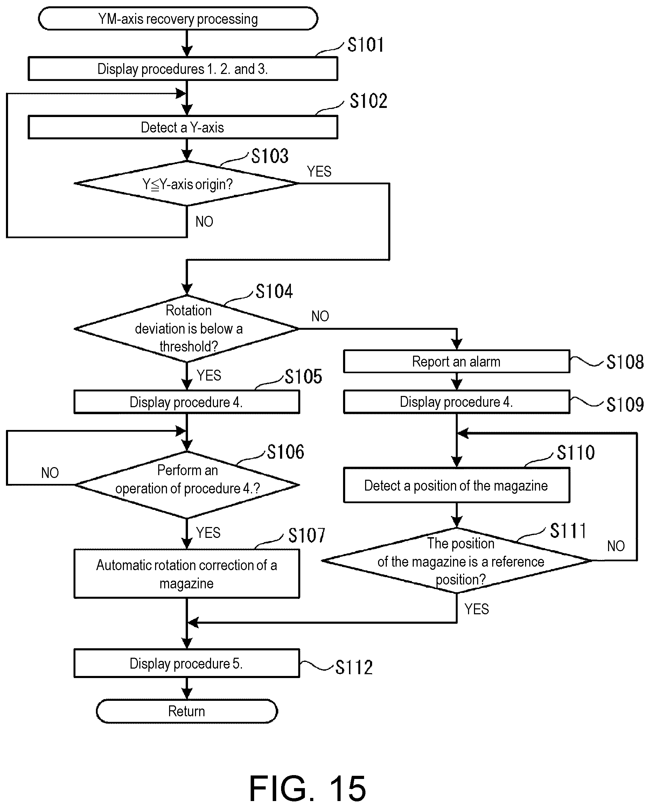

Referring to FIG. 15, the YM-axis recovery processing will be described. As shown in FIG. 27, the CPU 41 displays procedures 1 to 3 out of the five procedures in the display region 83A (S101). Procedures 1 to 3 are the same as the procedures 1 to 3 for STEP 2-a displayed in the display region 82A of the Y-axis recovery screen 82 shown in FIG. 25. The user operates according to procedures 1 to 3. In procedure 3, the user lowers the Y-axis of the main shaft 7 towards the Y-axis origin. The CPU 41 detects the position of the Y-axis of the main shaft 7 (S102). The CPU 41 determines whether the detected Y-axis is at or below the Y-axis origin or not (S103). Until the Y-axis becomes at or below the Y-axis origin, the CPU 41 returns to S102 and waits. In the case where the Y-axis becomes at or below the Y-axis origin (S103: YES), the main shaft 7 is out of the magazine rotation region. Therefore, in this state, even if the magazine 31 is rotated, the grip arm 38 does not interfere with the main shaft 7.

Therefore, the CPU 41 determines whether the rotation deviation occurring in the magazine 31 is below the threshold or not (S104). In the case where the rotation deviation is below the threshold (S104: YES), as shown in FIG. 27, procedure 4 is further displayed in the display region 83A (S105). As procedure 4, by pressing the [Magazine forward rotation] key while pressing the [Cancel] key on the operation unit 27, the magazine 31 automatically returns to the correct position. The CPU 41 determines whether the operation of procedure 4 is performed or not (S106). Until the operation of procedure 4 is performed (S106: NO), the CPU 41 returns to S106 and waits. In the case where the operation of procedure 4 is performed (S106: YES), the CPU 41 performs automatic rotation correction of the magazine 31 by generating an automatic correction command for the magazine 31 and outputting the automatic correction command to the drive circuit 75 (S107). The automatic rotation correction is a correction in which the magazine 31 is rotated and returned to the reference position. As a result, the rotation deviation of the magazine 31 is automatically resolved. The CPU 41 further displays procedure 5 in the display region 83A (S112).

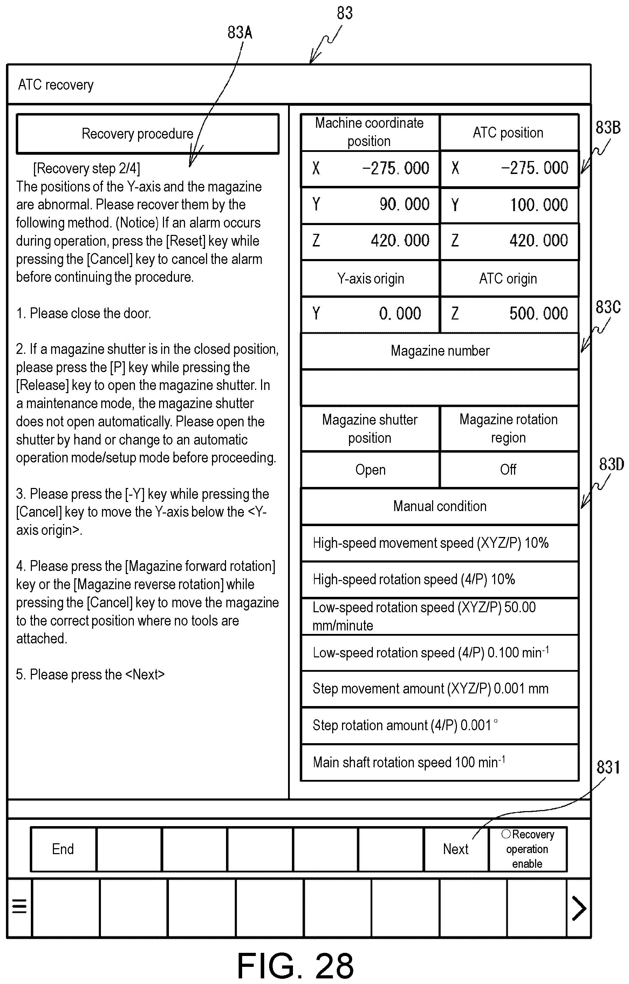

On the other hand, in the case where the rotation deviation is at or above the threshold (S104: NO), an alarm is reported indicating that correction is needed due to the large amount of deviation (S108), and as shown in FIG. 28, procedure 4 is further displayed in the display region 83A (S109). Procedure 4 in this case is different from procedure 4 in FIG. 27, and involves manually moving the grip arm 38 without a tool attached to the correct position by pressing either the [Magazine forward rotation] key or the [Magazine reverse rotation] key while pressing the [Cancel] key on the operation unit 27. The user operates according to procedure 4 and rotates the magazine 31 towards the reference position to resolve the rotation deviation.

The CPU 41 detects the position of the magazine 31 (S110) and determines whether the position of the magazine 31 has become the reference position or not (S111). Until the position of the magazine 31 becomes the reference position (S111: NO), the CPU 41 returns to S110 and waits. In the case where the position of the magazine 31 has returned to the reference position (S111: YES), the grip arm 38 without a tool attached is indexed to the tool transfer position, so the CPU 41 further displays procedure 5 in the display region 83A (S112). Procedure 5 is the operation of pressing a Next key 831. The Next key 831 is displayed in the lower right of the YM-axis recovery screen 83. The CPU 41 ends the processing and returns to S53 in FIG. 13 to proceed with the processing.

As shown in FIG. 13, the CPU 41 determines whether the recovery operation is completed or not (S53). Until the user presses the Next key 831, the recovery operation is not completed (S53: NO), so the CPU 41 returns to S53 and waits. In the case where the Next key 831 is pressed, the recovery operation is completed (S53: YES), so the CPU 41 displays the index tool confirmation screen 88 (refer to FIG. 40) to be described later on the display unit 26 (S54).

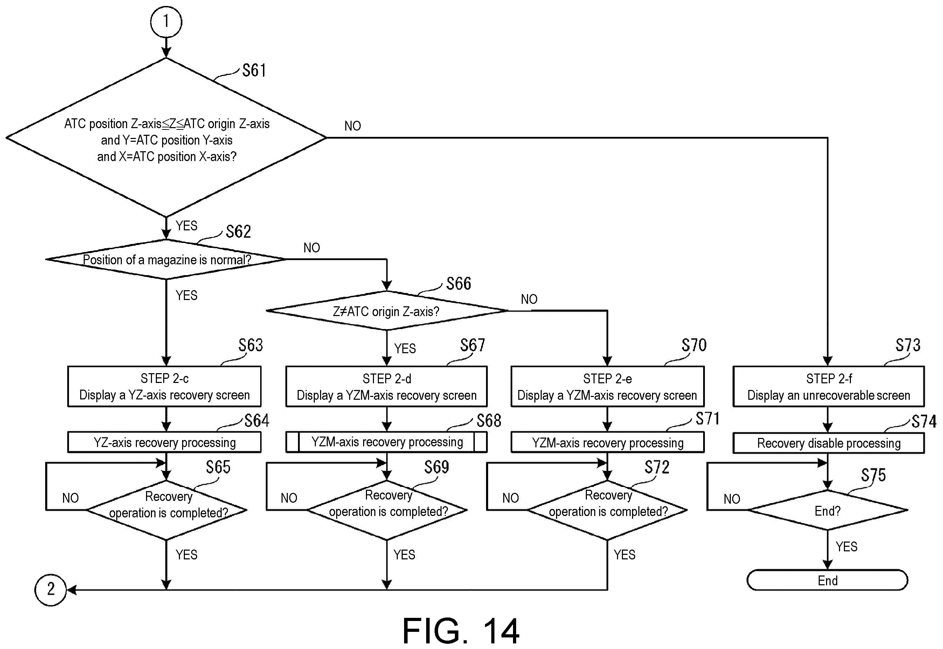

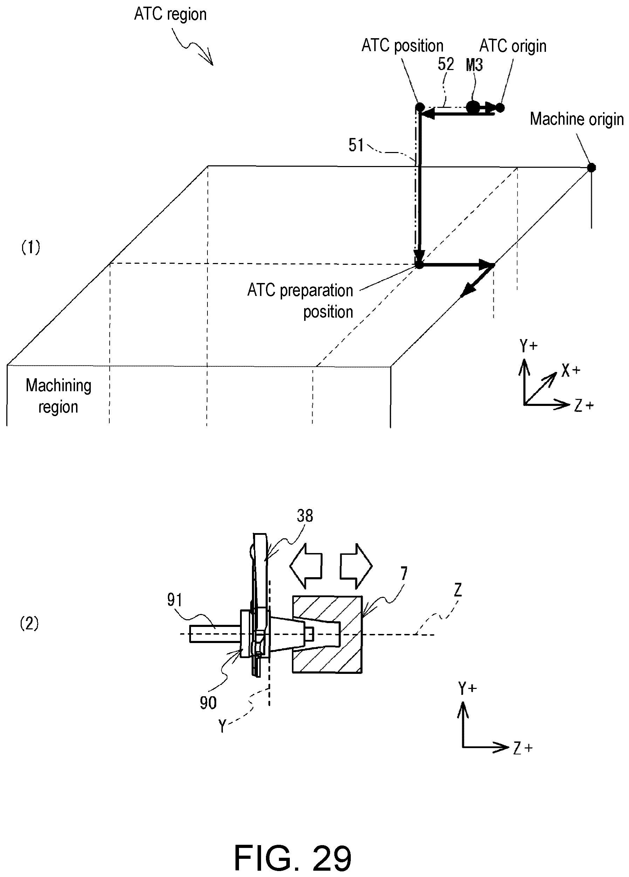

Furthermore, in the determination processing of S46, in the case where the position of the main shaft 7 does not satisfy the conditions of Z = ATC position Z-axis and Y < ATC position Y-axis and X = ATC position X-axis (S46: NO), as shown in FIG. 14, the CPU 41 determines whether the position of the main shaft 7 satisfies the conditions of ATC position Z-axis ≦ Z ≦ ATC origin Z-axis and Y = ATC position Y-axis and X = ATC position X-axis S(S61). In the case where the conditions of ATC position Z-axis ≤ Z ≤ ATC origin and Y = ATC position Y-axis and X = ATC position X-axis are satisfied (S61: YES), for example, as shown in FIG. 29(1), the main shaft 7 is positioned at point M3. Since the point M3 is on the tool exchange path 52, it may be inferred that the main shaft 7 stopped in the middle of advancing or retreating on the tool exchange path 52.

Next, the CPU 41 determines whether the position of the magazine 31 is normal or not (S62). For example, as shown in FIG. 29(2), in the case where the position of the magazine 31 is normal, the grip arm 38 indexed to the tool transfer position is disposed in a direction parallel to the Y-axis direction while gripping the tool holder 90, so the tool holder 90 and the tool 91 are disposed parallel to the Z-axis direction. Therefore, the tool holder 90 is disposed coaxially with the main shaft 7 in the Z-axis direction. In this way, in the case where the position of the magazine 31 is normal (S62: YES), the CPU 41 determines the recovery procedure for the main shaft 7 to be the operation pattern of STEP 2-c to be described later, and displays a YZ-axis recovery screen 84 corresponding to the operation pattern on the display unit 26 (S63).

### <STEP 2-c>

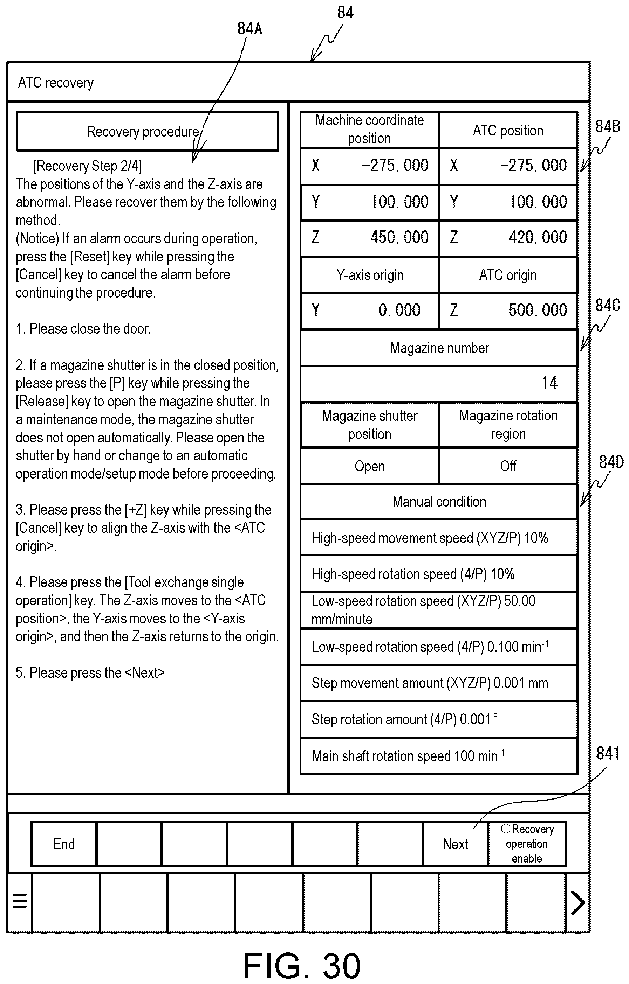

As shown in FIG. 30, the YZ-axis recovery screen 84 includes display regions 84A to 84D. STEP 2-c is an operation pattern in which the main shaft 7 positioned on the tool exchange path 52 is first retracted to the ATC origin along the tool exchange path 52, then advanced to the ATC position, moved from the ATC position to the ATC preparation position, and then the Z-axis is returned to the ATC origin. The display regions 84B to 84D are the same as the display regions 81B to 81D of the axis return screen 81 shown in FIG. 23, so the description thereof is omitted.

In the display region 84A, a caution alert is provided indicating that the positions of the Y-axis and Z-axis are abnormal, that recovery should be performed according to the following procedure, and that as a (Notice), in the case where an alarm occurs during operation, press the [Cancel] key while pressing the [Reset] key on the operation unit 27 to cancel the alarm before continuing the procedure. Below the caution alert, five procedures needed for STEP 2-c are displayed as guidance. Procedures 1 and 2 are the same as procedures 1 and 2 for STEP 2-a displayed in the display region 82A of the Y-axis recovery screen 82 shown in FIG. 25. As procedure 3, press the [+Z] key while pressing the [Cancel] key on the operation unit 27 to align the Z-axis of the main shaft 7 with the ATC origin. As procedure 4, press the [Tool exchange single operation] key on the operation unit 27. By pressing the [Tool exchange single operation] key, the Z-axis of the main shaft 7 moves to the ATC position, the Y-axis moves to the Y-axis origin, and then the Z-axis returns to the machine origin. After completing the recovery operations of procedures 1 to 4, as procedure 5, press a Next key 841. The Next key 841 is displayed in the lower right of the YZ-axis recovery screen 84. The user performs operations according to the five procedures.

Referring to FIG. **14** again, the CPU 41 executes the YZ-axis recovery processing according to the operations of procedures 1 to 4 by the user (S64). Through the Z-axis recovery processing, after the Y-axis of the main shaft 7 moves to the Y-axis origin, the Z-axis returns to the machine origin. As a result, the CPU 41 can safely and appropriately recover the main shaft 7, which stopped within the ATC region, to the machining region along the tool exchange paths 52 and 51. The CPU 41 determines whether the recovery operation is complete or not (S65). Since the recovery operation is not complete until the user presses the Next key 841 (S65: NO), the CPU 41 returns to S65 and waits. In the case where the Next key 841 is pressed, the recovery operation is complete (S65: YES), and referring to FIG. 13 again, the CPU 41 displays the index tool confirmation screen 88 (refer to FIG. 40), which will be described later, on the display unit 26 (S54).

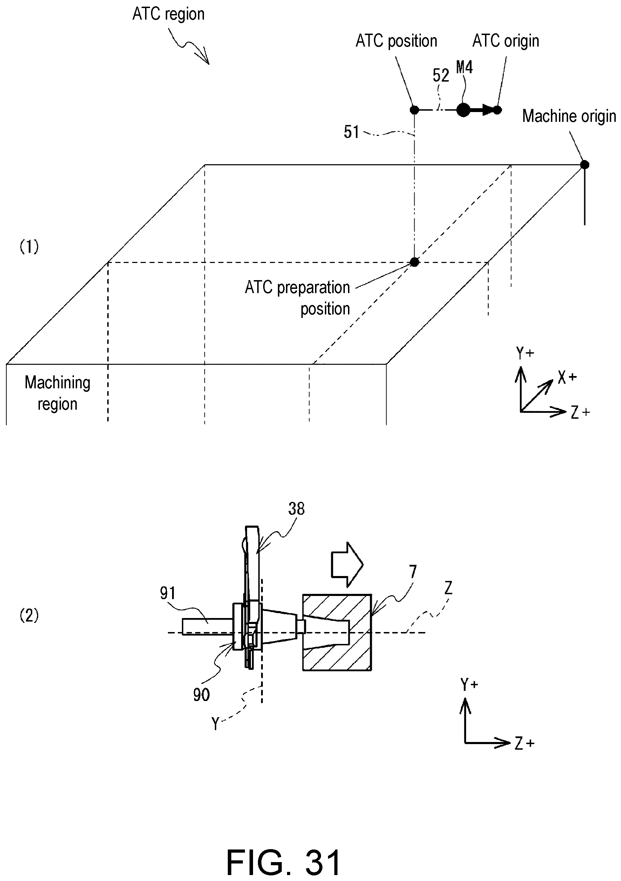

In addition, in the determination processing of S61, even if the position of the main shaft 7 satisfies the conditions of ATC position Z-axis ≦ Z ≦ ATC origin and Y = ATC position Y-axis and X = ATC position X-axis (S61: YES), there may be cases where the position of the magazine 31 is not normal (S62: NO) and rotation deviation occurs. For example, as shown in FIG. 31(1), even if the main shaft 7 is positioned at point M4 on the tool exchange path 52, as shown in FIG. 31(2), if rotation deviation has occurred in the magazine 31, the positions of the tool holder 90 and the tool 91 gripped by the grip arm 38 may be shifted in the Y-axis + direction with respect to the main shaft 7, and may also be shifted in the X-axis + or - direction. In this state, if the main shaft 7 were to be retracted once to the ATC origin along the tool exchange path 52 and then advanced towards the ATC position as in STEP 2-c, the tool holder 90 gripped by the grip arm 38 may interfere with the tip of the main shaft 7.

Therefore, as shown in FIG. 14, the CPU 41 determines whether the Z-axis of the main shaft 7 is not at the ATC origin (S66). For example, as shown in FIG. 31(1), in the case where the main shaft 7 is positioned at the point M4 on the tool exchange path 52, since the Z-axis is not at the ATC origin (S66: YES), the CPU 41 determines the recovery procedure for the main shaft 7 to be the operation pattern of STEP 2-d to be described later, displays a YZM-axis recovery screen 85 corresponding to the operation pattern on the display unit 26 (S67), and executes the YZM-axis recovery processing (S68).

### <STEP 2-d>

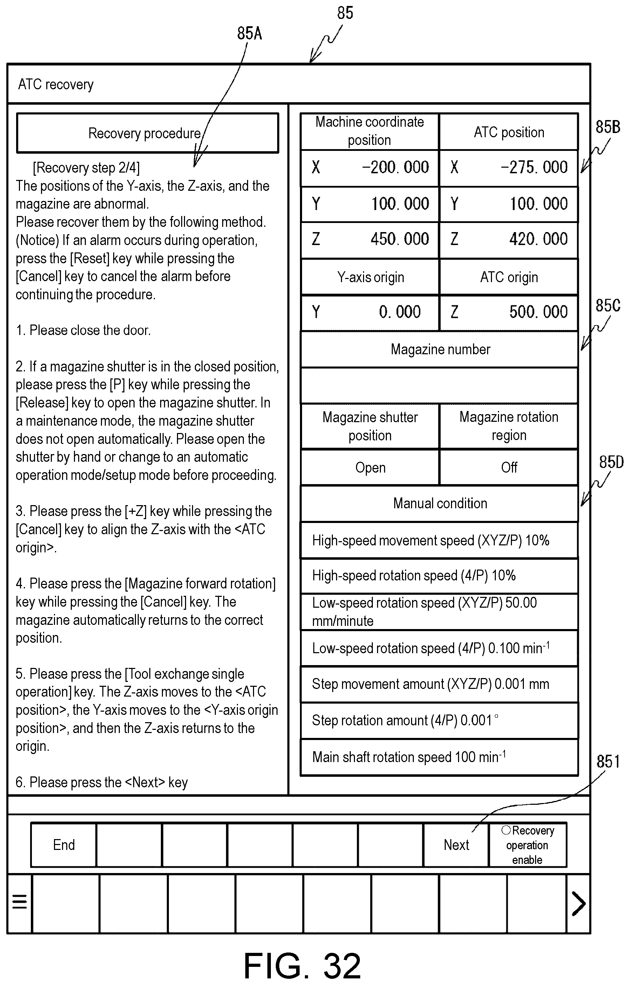

As shown in FIG. 32, the YZM-axis recovery screen 85 includes display regions 85A to 85D. In the display region 85A, a caution alert is provided indicating that the positions of the Y-axis, the Z-axis, and the magazine are abnormal, that recovery should be performed according to the following procedure, and that as a (Notice), in the case where an alarm occurs during operation, press the [Cancel] key while pressing the [Reset] key on the operation unit 27 to cancel the alarm before continuing the procedure. Below the caution alert, the recovery procedure for STEP 2-d is displayed. STEP 2-d is an operation pattern in which the main shaft 7 positioned on the tool exchange path 52 is first retracted to the ATC origin along the tool exchange path 52, then after returning the position of the magazine 31 to normal, the Z-axis is advanced to the ATC position, moved from the ATC position to the ATC preparation position, and then the Z-axis is returned to the ATC origin. The display regions 85B to 85D are the same as the display regions 81B to 81D of the axis return screen 81 shown in FIG. 23, so the description thereof is omitted. In STEP 2-d, since the position of the magazine 31 is shifted, the magazine number is not displayed in the display region 85C. In addition, since the point M4 of the main shaft 7 is within the magazine rotation region, "Off" is displayed in the column of the magazine rotation region of the display region 81C.

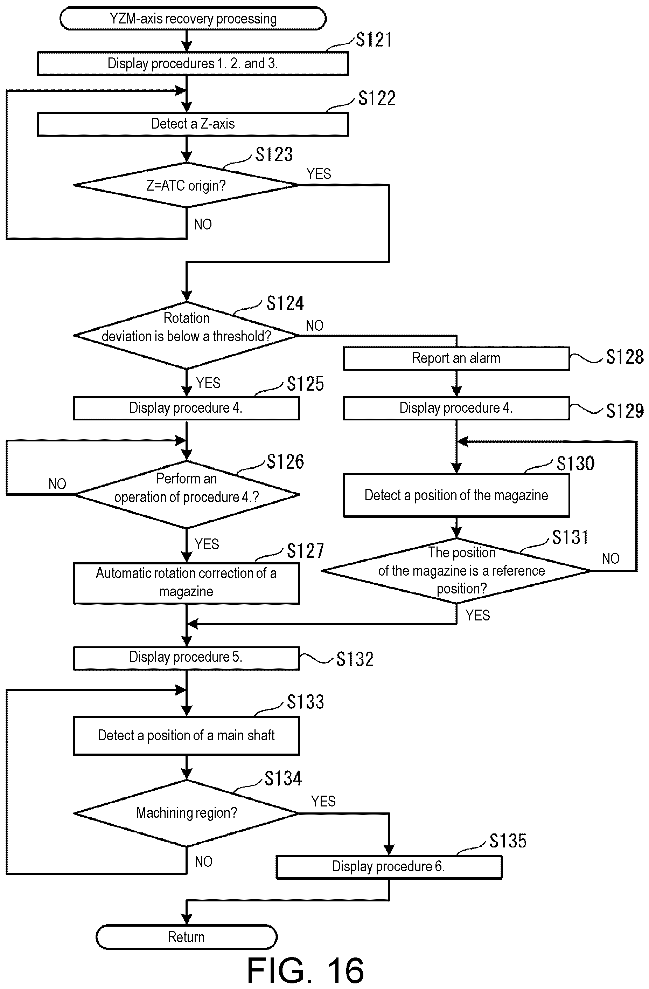

Referring to FIG. 16, the YZM-axis recovery processing will be described. The CPU 41 displays procedures 1 to 3 out of the six procedures in the display region 85A (S121). Procedures 1 to 3 are the same as procedures 1 to 3 for STEP 2-c displayed in the display region 84A of the YZ-axis recovery screen 84 shown in FIG. 30. The user operates according to procedures 1 to 3. Procedure 3 is an operation to move the Z-axis of the main shaft 7 towards the ATC origin. The CPU 41 detects the Z-axis of the main shaft 7 (S122). The CPU 41 determines whether the detected Z-axis is at the ATC origin or not (S123). Until the Z-axis reaches the ATC origin (S123: NO), the CPU 41 returns to S122 and monitors the Z-axis. In the case where the Z-axis reaches the ATC origin (S123: YES), since the main shaft 7 has retreated further back than the magazine rotation region, in this state, even if the magazine 31 is rotated, the grip arm 38 does not interfere with the main shaft 7.

Next, the CPU 41 determines whether the rotation deviation occurring in the magazine 31 is below the threshold or not (S124). In the case where the rotation deviation is below the threshold (S124: YES), as shown in FIG. 32, procedure 4 is further displayed in the display region 83A (S125). As procedure 4, by pressing the [Magazine forward rotation] key while pressing the [Cancel] key on the operation unit 27, the magazine 31 automatically returns to the correct position. The CPU 41 determines whether the operation of procedure 4 is performed or not (S126). Until the operation of procedure 4 is performed (S126: NO), the CPU 41 returns to S126 and waits. In the case where the operation of procedure 4 is performed (S126: YES), the CPU 41 performs automatic rotation correction of the magazine 31 by generating an automatic correction command for the magazine 31 and outputting the automatic correction command to the drive circuit 75 (S127). As a result, the rotation deviation of the magazine 31 is automatically resolved. In the case where the rotation deviation is below the threshold (S124: YES), the CPU 41 may perform automatic rotation correction of the magazine 31 without executing each of the processing of S125 and S126. The CPU 41 further displays procedure 5 in the display region 85A (S132).

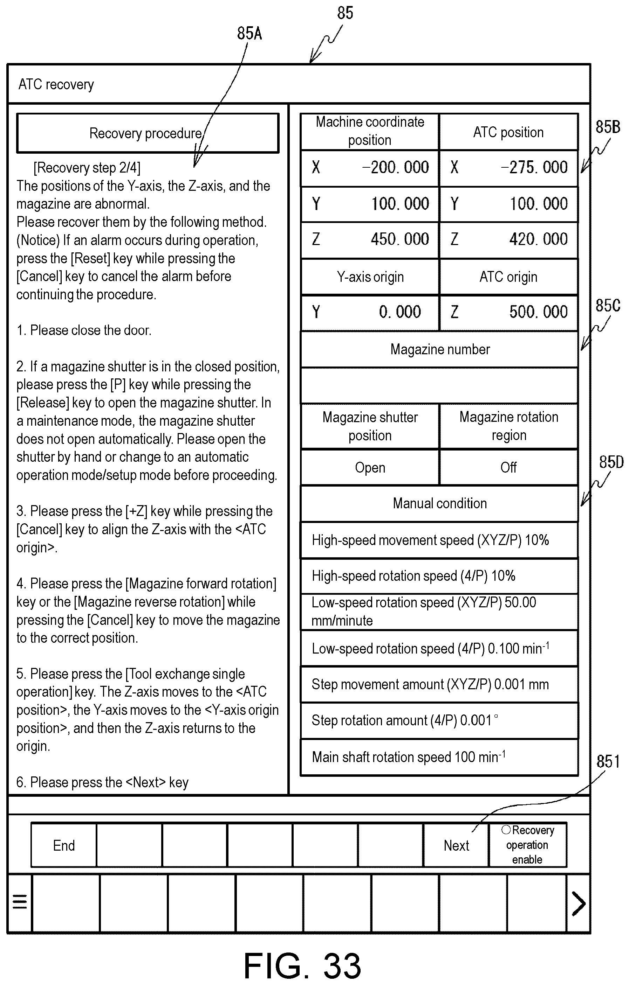

On the other hand, in the case where the rotation deviation is at or above the threshold (S124: NO), an alarm is reported indicating that correction is needed due to the large amount of deviation (S128), and as shown in FIG. 33, procedure 4 is further displayed in the display region 85A (S129). Procedure 4 in this case is different from procedure 4 in FIG. 32, and involves manually moving the grip arm 38 without a tool attached to the correct position by pressing either the [Magazine forward rotation] key or the [Magazine reverse rotation] key while pressing the [Cancel] key on the operation unit 27. The user operates according to procedure 4 and rotates the magazine 31 towards the reference position to resolve the rotation deviation.

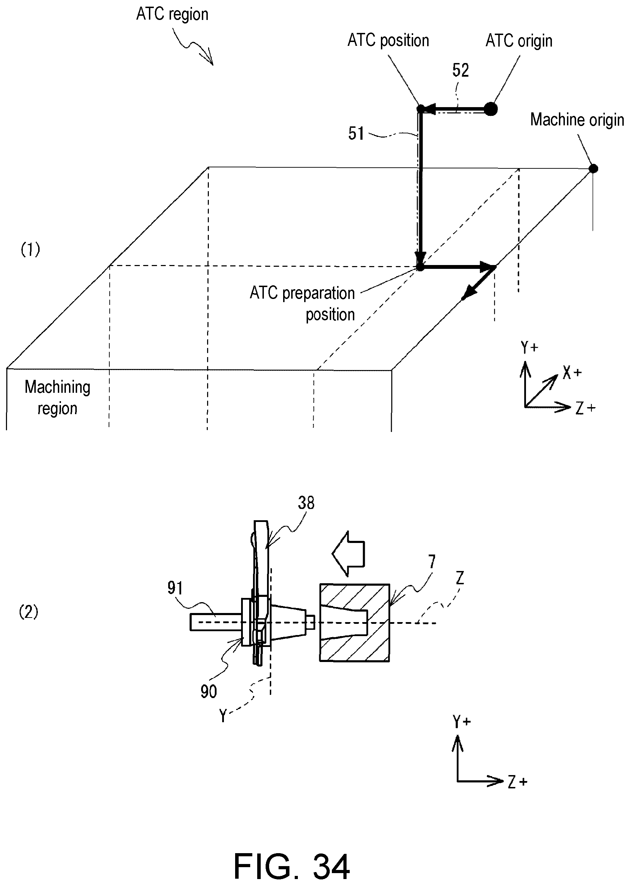

The CPU 41 detects the position of the magazine 31 (S130) and determines whether the position of the magazine 31 has become the reference position or not (S131). Until the position of the magazine 31 becomes the reference position (S131: NO), the CPU 41 returns to S130 and waits. As shown in FIG. 34(2), in the case where the position of the magazine 31 has returned to the reference position (S131: YES), the grip arm 38 without a tool attached is indexed to the tool transfer position, so the CPU 41 further displays procedure 5 in the display region 85A (S132).

Procedure 5 is the operation of pressing the [Tool exchange single operation] key on the operation unit 27. By pressing the [Tool exchange single operation] key, as shown in FIG. 34(1), the Z-axis of the main shaft 7 moves from the ATC origin to the ATC position, and after the Y-axis moves to the Y-axis origin, the Z-axis returns to the machine origin. The CPU 41 detects the position of the main shaft 7 (S133). The CPU 41 determines whether the detected position of the main shaft 7 is in the machining region or not (S134). Until the main shaft 7 reaches the machining region (S134: NO), the CPU 41 returns to S133 and monitors the position of the main shaft 7.

When the tool exchange single operation is completed, the main shaft 7 is positioned in the machining region (S134: YES), so the CPU 41 further displays procedure 6 in the display region 85A (S135). Procedure 6 is the operation of pressing a Next key 851. The Next key 851 is displayed in the lower right of the YZM-axis recovery screen 85. As a result, the CPU 41 can safely and appropriately recover the main shaft 7, which stopped within the ATC region, to the machining region along the tool exchange paths 52 and 51. The CPU 41 ends the YZM-axis recovery processing and proceeds with the processing to S69 in FIG. 14.

As shown in FIG. 14, the CPU 41 determines whether the recovery operation is completed or not (S69). Until the user presses the Next key 851, the recovery operation is not completed (S69: NO), so the CPU 41 returns to S69 and waits. In the case where the Next key 851 is pressed, the recovery operation is completed (S69: YES), and referring to FIG. 13 again, the CPU 41 displays the index tool confirmation screen 88, which will be described later, on the display unit 26 (S54).

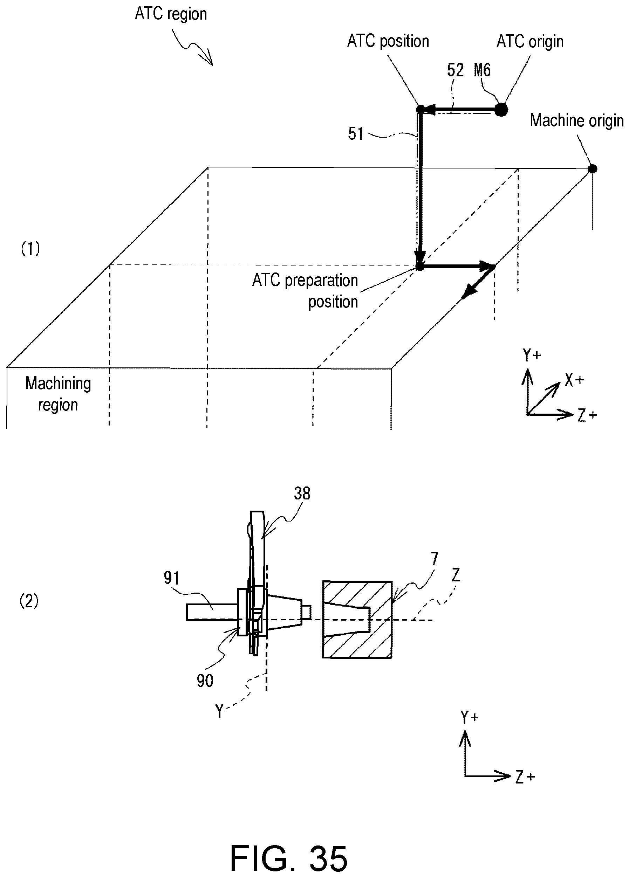

Furthermore, as shown in FIG. 14, in a state where the position of the magazine 31 is not normal (S62: NO), there may be cases where the Z-axis of the main shaft 7 is positioned at the ATC origin on the tool exchange path 52 (S66: NO). For example, as shown in FIG. 35(1), the main shaft 7 is positioned at point M6, which is the ATC origin on the tool exchange path 52. In this state, as shown in FIG. 35(2), due to the deviation of the position of the magazine 31, the position of the tool holder 90 gripped by the grip arm 38 is shifted in the Y-axis + direction with respect to the main shaft 7, and is further shifted in the X-axis + or - direction. In this case (S62: NO, S66: NO), the CPU 41 determines the recovery procedure for the main shaft 7 to be the operation pattern of STEP 2-e to be described later and displays a YZM-axis recovery screen 86 corresponding to the operation pattern on the display unit 26 (S70).

### <STEP 2-e>

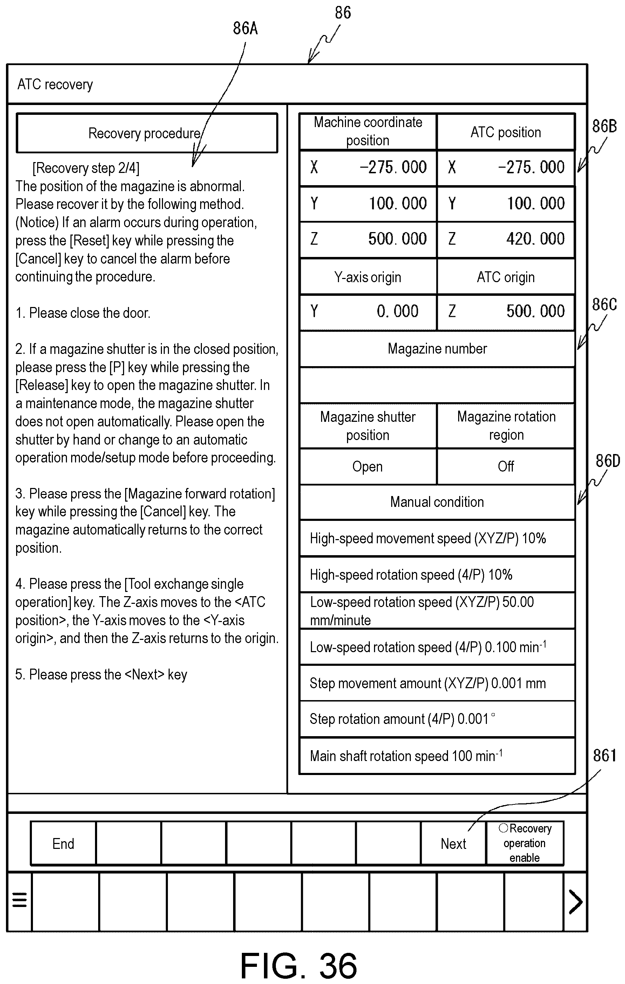

As shown in FIG. 36, the YZM-axis recovery screen 86 includes display regions 86A to 86D. In the display region 86A, a caution alert is provided indicating that the position of the magazine is abnormal, that recovery should be performed according to the following procedure, and that as a (Notice), in the case where an alarm occurs during operation, press the [Cancel] key while pressing the [Reset] key on the operation unit 27 to cancel the alarm before continuing the procedure. Below the caution alert, the recovery procedure for STEP 2-e is displayed. STEP 2-e is an operation pattern in which, with the main shaft 7 positioned at the ATC origin, the position of the magazine 31 is returned to normal, then the Z-axis is advanced to the ATC position, moved from the ATC position to the ATC preparation position, and then the Z-axis is returned to the ATC origin. The display regions 86B to 86D are the same as the display regions 81B to 81D of the axis return screen 81 shown in FIG. 23, so the description thereof is omitted. In STEP 2-e, since the position of the magazine 31 is shifted, the magazine number is not displayed in the display region 86C. In addition, since the point M6 of the main shaft 7 is outside the magazine rotation region, "On" is displayed in the column of the magazine rotation region of the display region 81C.

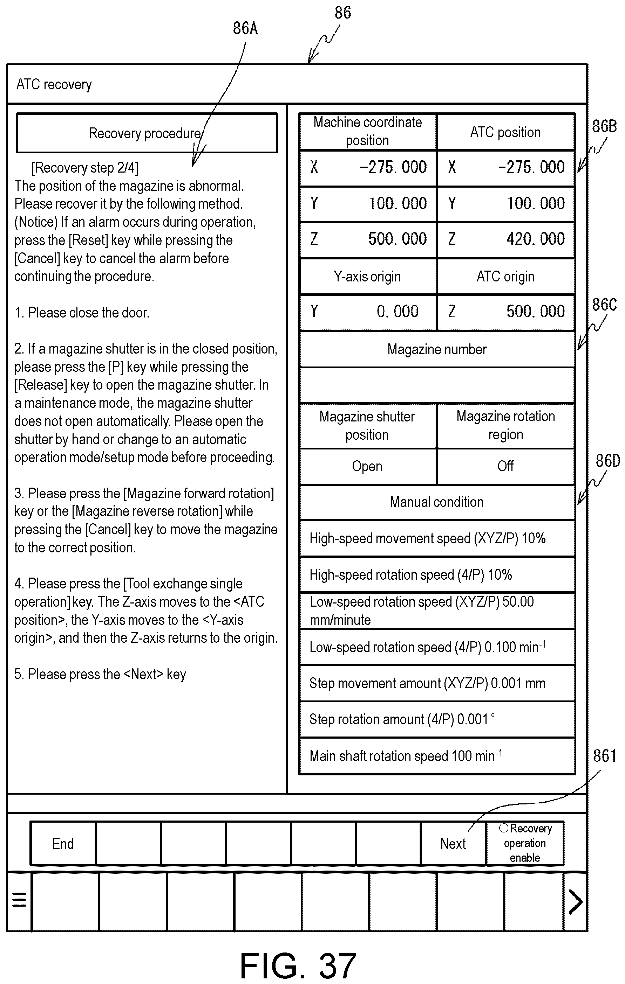

In the display region 86A, five procedures needed for STEP 2-e are displayed. Procedures 1 and 2 are the same as procedures 1 and 2 for STEP 2-d displayed in the display region 85A of the YZM-axis recovery screen 85 shown in FIG. 32. Although not described in detail, in STEP 2-e, similar to STEP 2-c, in the case where the rotation deviation occurring in the magazine 31 is below the threshold, as shown in FIG. 36, procedure 3 displayed in the display region 83A involves executing automatic rotation correction of the magazine 31 by pressing the [Magazine forward rotation] key while pressing the [Cancel] key on the operation unit 27. On the other hand, in the case where the rotation deviation occurring in the magazine 31 is at or above the threshold, as shown in FIG. 37, procedure 3 displayed in the display region 83A involves manually moving the grip arm 38 without a tool attached to the correct position by pressing either the [Magazine forward rotation] key or the [Magazine reverse rotation] key while pressing the [Cancel] key on the operation unit 27.

By performing either procedure 3, the position of the tool holder 90 gripped by the grip arm 38 faces the main shaft 7 in the Z-axis direction. As shown in FIG. 36 or FIG. 37, procedure 4 is the operation of pressing the [Tool exchange single operation] key on the operation unit 27. By pressing the [Tool exchange single operation] key, as shown in FIG. 35(1), the Z-axis of the main shaft 7 moves from the ATC origin to the ATC position, and after the Y-axis moves to the Y-axis origin, the Z-axis returns to the machine origin. After completing the recovery operations of procedures 1 to 4, as procedure 5, press a Next key 861. The Next key 861 is displayed in the lower right of the YZM-axis recovery screen 86.

Referring to FIG. 14 again, the CPU 41 executes the YZM-axis recovery processing according to the operations of procedures 1 to 4 by the user (S71). Through the YZM-axis recovery processing, the Z-axis of the main shaft 7 moves from the ATC origin to the ATC position, and after the Y-axis moves to the Y-axis origin, the Z-axis returns to the machine origin. As a result, the CPU 41 can safely and appropriately recover the main shaft 7, which stopped within the ATC region, to the machining region along the tool exchange paths 52 and 51. The CPU 41 determines whether the recovery operation is completed or not (S72). Until the user presses the Next key 861, the recovery operation is not completed (S72: NO), so the CPU 41 returns to S72 and waits. In the case where the Next key 861 is pressed, the recovery operation is completed (S72: YES), and referring to FIG. 13 again, the CPU 41 displays the index tool confirmation screen 88, which will be described later, on the display unit 26 (S54).

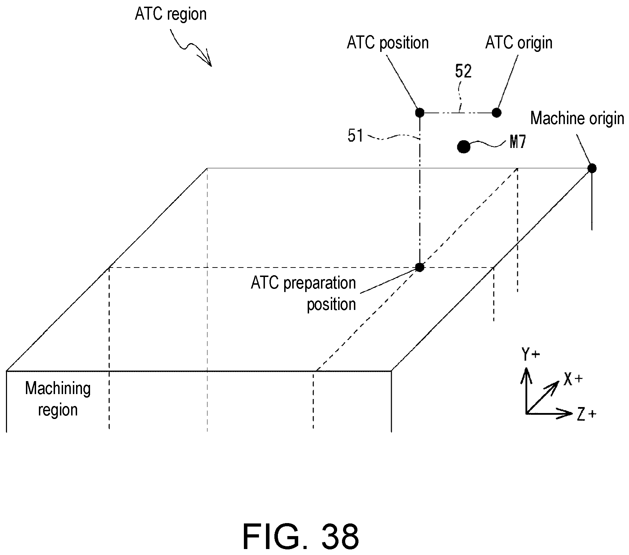

In addition, in the determination processing of S61, there may be cases where the position of the main shaft 7 does not satisfy the conditions of ATC position Z-axis ≦ Z ≦ ATC origin and Y = ATC position Y-axis and X = ATC position X-axis (S61: NO). For example, as shown in FIG. 38, consider a case where the main shaft 7 is positioned at point M7. The point M7 is within the ATC region, but is not located on the tool exchange paths 51 and 52. In other words, the main shaft 7 is unable to return to the tool exchange paths 51 and 52 by axis return, and is in a difficult situation to recover towards the machining region, so recovery operations is unable to be performed by the user. In this case, the CPU 41 displays an unrecoverable screen 87 on the display unit 26 (S73).

### <STEP 2-f>

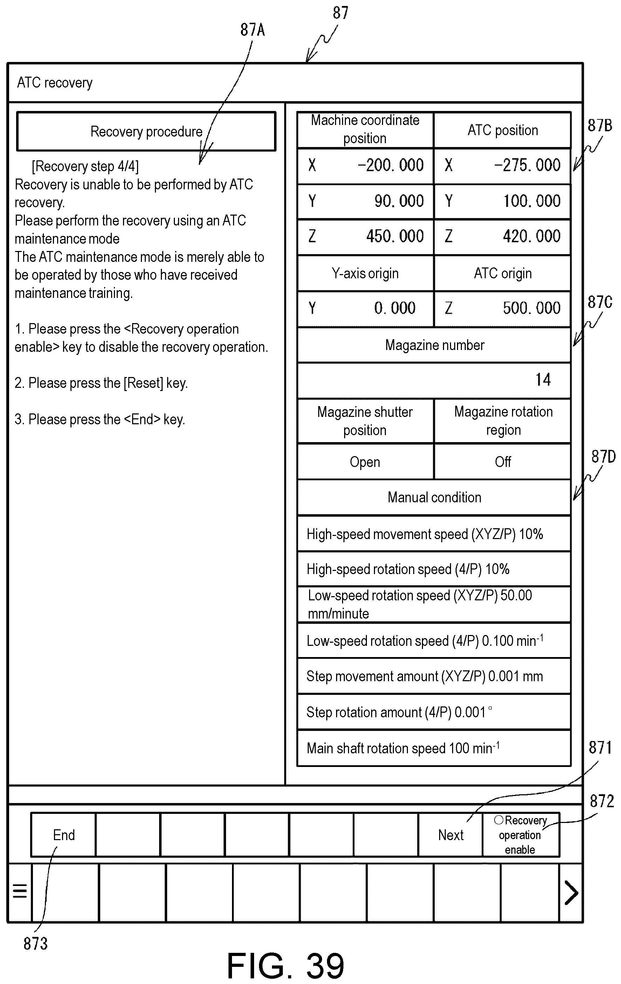

As shown in FIG. 39, the unrecoverable screen 87 includes display regions 87Ato 87D. The recovery procedure for STEP 2-f is displayed in the display region 87A. STEP 2-f is a process that restricts the movement of the main shaft 7 and ends the recovery operation. The display regions 87B to 87D are the same as the display regions 81B to 81D of the axis return screen 81 shown in FIG. 23, so the description thereof is omitted. A Next key 871 and a Recovery operation enable key 872 are displayed in the lower right of the unrecoverable screen 87. An End key 873 is displayed in the lower left of the unrecoverable screen 87.

In the display region 87A, a caution alert is provided indicating that ATC recovery is unable to be performed, that recovery should be performed using an ATC maintenance mode, and that merely skilled operators who have received maintenance training are authorized to operate in the ATC maintenance mode. In ATC maintenance mode, the movement restrictions on the main shaft 7 in the ATC region are lifted, enabling the recovery operation by skilled operators. Below the caution alert, three procedures needed to end the recovery operation are displayed. As procedure 1, press the Recovery operation enable key 872 to disable the recovery operation. As procedure 2, press the [Reset] key on the operation unit 27. As procedure 3, press the End key 873.

Referring to FIG. 14 again, the CPU 41 executes the recovery disable processing according to the operations of procedures 1 to 3 by the user (S74). The recovery disable processing disables the recovery operation. The CPU 41 determines whether the recovery disable processing ends or not (S75). Until the user presses the End key 873, the recovery disable processing is not complete (S75: NO), so the CPU 41 returns to S75 and waits. In the case where the End key 873 is pressed, the recovery disable processing ends (S75: YES), so the CPU 41 ends the ATC recovery processing.

In addition, in the case where the recovery operation of the main shaft 7 is completed (FIG. 13 S50: YES, S53: YES, FIG. 14 S65: YES, S69: YES, S72: YES), the main shaft 7 is positioned in the machining region. In this state, if a tool is attached to the grip arm 38 indexed to the tool transfer position of the magazine 31, the main shaft 7 may collide with the tool holder 90 and the tool 91 when the next ATC operation is performed, so it is needed to remove the tool from the grip arm. Therefore, as shown in FIG. 13, the CPU 41 displays the index tool confirmation screen 88 on the display unit 26 (S54).

### <STEP 3>

As shown in FIG. 40, the index tool confirmation screen 88 includes display regions 88A to 88D. The display region 88A displays the recovery procedure for STEP 3. STEP 3 is a process to check whether the tool is removed from the grip arm 38 indexed to the tool transfer position. The display regions 87B to 87D are the same as the display regions 81B to 81D of the axis return screen 81 shown in FIG. 23, so the description thereof is omitted. A Next key 881 is displayed in the lower right of the index tool confirmation screen 88.

In the display region 88A, two procedures needed for STEP 3 are displayed. As procedure 1, remove a tool if the tool is attached to the grip arm 38 of the magazine number. Furthermore, as a (Notice), a caution alert is provided regarding the potential damage to the machine or tool if the next ATC operation is performed with a tool attached. As procedure 2, press the Next key 881 after checking that no tool is attached to the grip arm 38.

Referring to FIG. 13 again, the CPU 41 determines whether the confirmation by the user is complete or not (S55). Until the user presses the Next key 881, the confirmation is not complete (S55: NO), so the CPU 41 returns to S54 and waits. In the case where the Next key 881 is pressed, the confirmation by the user is complete (S55: YES), and the CPU 41 displays an end screen 89 on the display unit 26 (S56).

### <STEP 4>

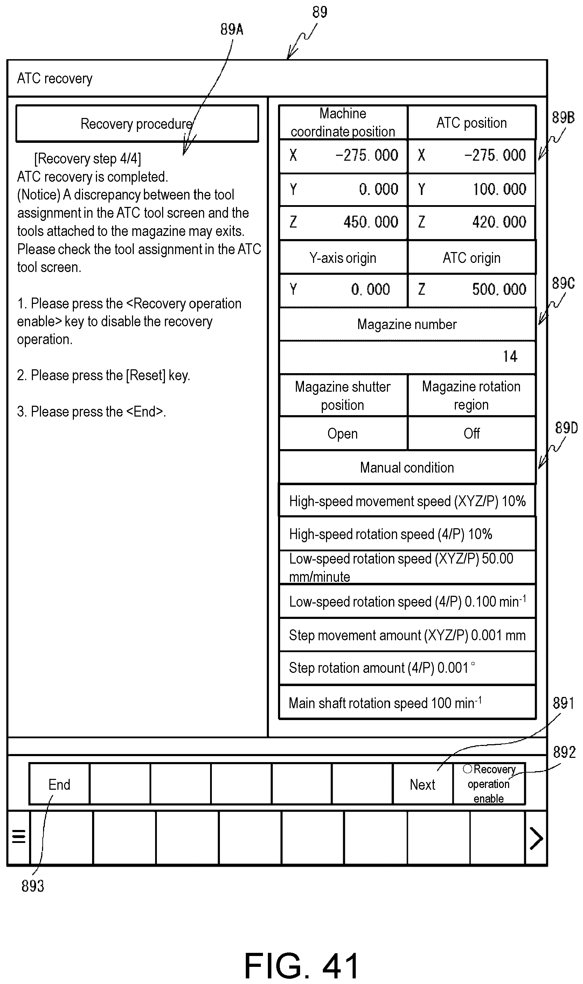

As shown in FIG. 41, the end screen 89 includes display regions 89A to 89D. The recovery procedure for STEP 4 is displayed. STEP 4 is the process to end the ATC recovery process. The display regions 89B to 89D are the same as the display regions 81B to 81D of the axis return screen 81 shown in FIG. 23, so the description thereof is omitted. A Next key 891 and a Recovery operation enable key 892 are displayed in the lower right of the end screen 89. An End key 893 is displayed in the lower left of the end screen 89.

In the display region 89A, a caution alert is provided indicating that the ATC recovery is complete, and that as a (Notice), the user should check the tool assignment in the ATC tool screen (not shown) through guidance since there may be a discrepancy between the tool assignment in the ATC tool screen and the tools attached to the magazine 31. The ATC tool screen is displayed on the display unit 26 through operation of the operation panel 25. The ATC tool screen displays a tool assignment table showing the types of tools assigned to each of grip arms of the magazine 31. Furthermore, below the caution alert, three procedures needed to end the ATC recovery process are displayed. As procedure 1, press the Recovery operation enable key 892 to enable the recovery operation. As procedure 2, press the [Reset] key on the operation unit 27. As procedure 3, press the End key 893 after checking the operations of procedures 1 and 2.

Referring to FIG. 13 again, the CPU 41 determines whether the confirmation by the user is complete or not (S57). Until the user presses the End key 893, the confirmation is not complete (S57: NO), so the CPU 41 returns to S56 and waits. In the case where the End key 893 is pressed, the confirmation by the user is complete (S57: YES), and the CPU 41 ends the ATC recovery processing.

In the above description, the grip arm 38 is an example of the "gripping unit" of the present invention. The magazine motor 33 is an example of the "rotation drive unit" of the present invention. The storage device 44 is an example of the "storage unit" of the present invention. The CPU 41 executing the processing of S47 in FIG. 13 is an example of the "coordinate detection unit" and "deviation determination unit" of the present invention. The CPU 41 executing the processing of S102 in FIG. 15 is an example of the "position detection unit" of the present invention. The CPU 41 executing the processing of S103 is an example of the "determination unit" of the present invention. The CPU 41 executing the processing of S101, S104, S105, S107, and S109 is an example of the "correction request unit" of the present invention. In addition, the CPU 41 executing the processing of S62 in FIG. 14 is an example of the "coordinate detection unit" and "deviation determination unit" of the present invention. The CPU 41 executing the processing of S122 in FIG. 15 is an example of the "position detection unit" of the present invention. The CPU 41 executing the processing of S123 is an example of the "determination unit" of the present invention. The CPU 41 executing the processing of S121, S124, S125, S127, and S129 is an example of the "correction request unit" of the present invention. The CPU 41 is an example of the "control unit" of the present invention. The storage device 44 is an example of the "storage unit" of the present invention.

As described above, the numerical value control device 40 of the embodiment controls the operation of the machine tool 1. The machine tool 1 includes a magazine 31 capable of rotating around a pivot shaft 37A. Multiple grip arms 38 are provided along the circumferential direction on the outer periphery of the magazine 31. The grip arm 38 is capable of gripping a tool 91 to be attached to the main shaft 7 of the machine tool 1. The CPU 41 of the numerical value control device 40 rotationally drives the magazine 31 to index any of the grip arms 38. In the storage device 44, the rotation position coordinates of the magazine 31 corresponding to the index position of the grip arm 38 are stored as reference coordinates indicating the reference position of the magazine 31. In order to recover the position of the main shaft 7 while the main shaft 7 is stopped, the CPU 41 detects the rotation position coordinates of the magazine 31, and determines whether rotation deviation exists in the magazine 31 by comparing the rotation position coordinates with the reference position stored in the storage device 44.

In the case where rotation deviation is determined to exist, the CPU 41 detects the position of the main shaft 7 and determines whether the detected position is located within the magazine rotation region. In the above-mentioned embodiment, if the main shaft 7 is on the tool exchange path 51 and not at the ATC preparation position, the main shaft 7 is determined to be within the magazine rotation region, and if the main shaft 7 is at the ATC preparation position, the main shaft 7 is determined to be outside the magazine rotation region. In addition, if the main shaft 7 is on the tool exchange path 52 and not at the ATC origin, the main shaft 7 is determined to be within the magazine rotation region, and if the main shaft 7 is at the ATC origin, the main shaft 7 is determined to be outside the rotation region.

In the case where it is determined that the position of the main shaft 7 is located within the magazine rotation region using such a determination method, if the main shaft 7 is on the tool exchange path 51, the CPU 41 moves the main shaft 7 to the ATC preparation position, and if the main shaft 7 is on the tool exchange path 52, the CPU 41 moves the main shaft 7 to the ATC origin, thereby retracting the main shaft 7 from the magazine rotation region. After that, the CPU 41 requests an operation or task to execute rotation correction to return the magazine 31 to the reference position. The operation to execute rotation correction refers to the operation of causing the magazine motor 33 to execute rotation correction. The task to execute rotation correction means a task for an operator to execute rotation correction. As a result, the numerical value control device 40 can avoid interference between the magazine 31 or the tool 91 gripped by the grip arm 38 and the main shaft 7 or the tool 91 attached to the main shaft 7 when performing rotation correction, thereby being able to appropriately perform rotation correction while reducing the likelihood of damage to the magazine 31, the main shaft 7, and the tool 91.

In the case where the magnitude of the rotation deviation occurring in the magazine 31 is below the threshold, the CPU 41 generates a rotation correction command and instructs the magazine motor 33 to perform the rotation correction operation. Since the rotation correction is performed automatically if the magnitude of the rotation deviation is below the threshold, the numerical value control device 40 can save effort compared to when an operator manually performs the rotation correction. In addition, even if the magnitude of the rotation deviation is minute, the magazine 31 may by appropriately returned to the reference position, thereby further reducing the likelihood of damage to the magazine 31, the main shaft 7, and the tool 91. On the other hand, in the case where the magnitude of the rotation deviation is at or above the threshold, the distance to rotate the magazine 31 is long, so it is needed to carefully rotate the magazine 31 and return the magazine 31 to the reference position. In this case, the CPU 41 displays and notifies the task of rotation correction to the operator on the display unit 26, allowing the operator to carefully rotate the magazine 31 while checking the surroundings of the magazine 31.

When the main shaft 7 is retracted from within the magazine rotation region, the CPU 41 moves the main shaft 7 along the tool exchange paths 51 and 52. The tool exchange paths 51 and 52 are the paths along which the main shaft is moved during tool exchange. As a result, the CPU 41 can reduce the likelihood of interference between the main shaft 7 or the tool 91 attached to the main shaft 7 and other members.

Among the inverted L-shaped tool exchange paths 51 and 52, the tool exchange path 51 is a predetermined path extending in the Y-axis direction between the ATC preparation position and the ATC position. In the case where the main shaft 7 which is stopped is on the tool exchange path 51 but not at the ATC preparation position, the main shaft 7 may be positioned within the magazine rotation region. In this case, the CPU 41 can retract the main shaft 7 from the magazine rotation region by retracting the main shaft 7 along the tool exchange path 51 to the ATC preparation position. As a result, the CPU 41 can safely perform the rotation correction of the magazine 31.

In the case where the main shaft 7 which is stopped is positioned between the ATC position and the ATC origin and within the magazine rotation region, the CPU 41 retracts the main shaft 7 to the ATC origin. As a result, the CPU 41 can safely perform the rotation correction of the magazine 31.

For example, in the case where an alarm or the like occurs and the tool exchange is stopped midway, the main shaft 7 is in a stopped state. In this case, the CPU 41 determines the rotation deviation of the magazine 31, and in the case where it is determined that the position of the stopped main shaft 7 is within the magazine rotation region, the CPU 41 can return the magazine to the reference position after retracting the main shaft 7 from the magazine rotation region.

In the case where the power of the machine tool 1 is turned on after being turned off during tool exchange, the main shaft 7 is in a stopped state. In this case, the CPU 41 determines the rotation deviation of the magazine 31. In the case where it is determined that rotation deviation exists and that the position of the stopped main shaft 7 is within the magazine rotation region, the rotation correction can be safely performed by retracting the main shaft 7 from the magazine rotation region and then returning the magazine 31 to the reference position.

The present invention is not limited to the above-described embodiment, and various modifications may be made. The machine tool 1 is a horizontal machine tool, but may be a vertical machine tool in which the axis direction of the main shaft extends in the up-down direction. The machine tool 1 includes a mechanism for relatively moving the tool 91 attached to the main shaft 7 in the three-axis directions of X-axis, Y-axis, and Z-axis with respect to the workpiece, but is not limited to three axes, and may be one axis or two axes, or may be three axes or more. In addition, the machine tool 1 has a structure in which the column 5 is moved in the X-axis direction and the Z-axis direction, and the main shaft head 6 (main shaft 7) is moved in the Y-axis direction along the front surface 5B of the column 5, thereby relatively moving the workpiece and the tool in the three-axis directions of X-axis, Y-axis, and Z-axis with respect to the workpiece fixed on the rotating table 9 with a jig, but may have a structure other than the aforementioned. For example, the column 5 may be moved in the X-axis direction, the main shaft head 6 (main shaft 7) may be moved in the Z-axis direction, and a support platform (not shown) supporting the column 5 and the main shaft head 6 may be moved in the Y-axis direction.

In the ATC recovery processing of the above-described embodiment (refer to FIG. 13), the axis return destination determination processing is executed before executing the axis return (S40 to S43), and then, in order to safely and appropriately move the position of the main shaft 7, which has been returned to the axis on the tool exchange paths 51 and 52, along the tool exchange paths 51 and 52 to the machining region, the recovery screens 82 to 86 corresponding to the stop position of the main shaft 7 are displayed on the display unit 26 (S45 to S72). However, the processing after S45 may be omitted, and the ATC recovery processing may be treated as processing up to the axis return.

For example, in the case where the position of the main shaft 7 stopped in the ATC region is within the range of the region W2, but the X-axis is not within the range of the recovery region W1, or the Z-axis is not within any of the ranges of the recovery regions W4 to W6, by performing the axis return of S43, the Y-axis of the main shaft 7 directly moves to the machining region. In this case, the CPU 41 does not need to execute the processing of recovering the main shaft 7 to the machining region.

In the above-described embodiment, in the axis return destination determination processing, after specifying the return destination for all moving axes including X-axis, Y-axis, and Z-axis, the axis return is executed for all axes. However, the axis return may be executed sequentially while specifying the return destination for each of the moving axes.

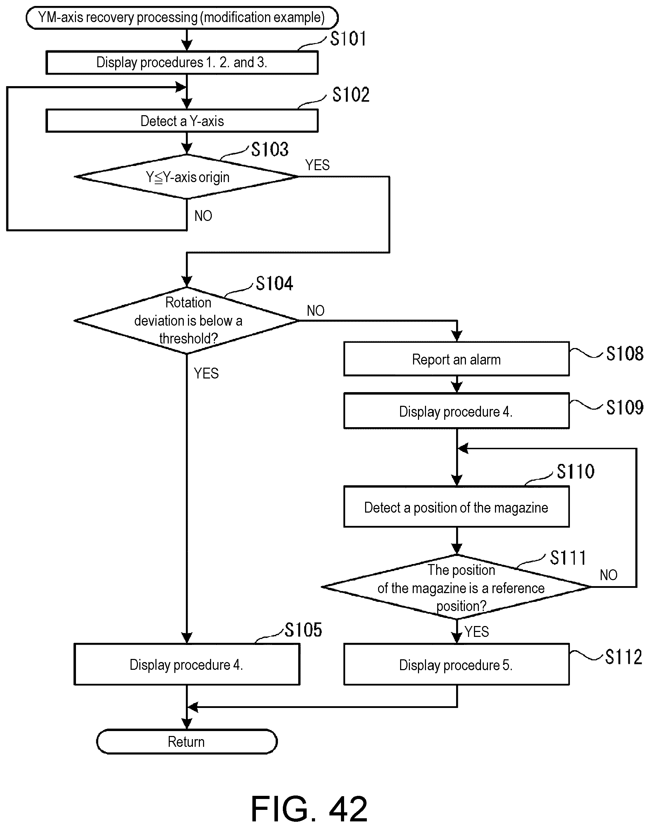

In the processing of S104 in the YM-axis recovery processing of FIG. 15, in the case where the rotation deviation is below the threshold value (S104: YES), the CPU 41 executes automatic rotation correction of the magazine 31 (S105 to S107). However, as shown in the modification example in FIG. 42, for example, in the case where the rotation deviation is below the threshold value (S104: YES), since moving the main shaft 7 as it is has little effect on the tool transfer, the rotation deviation of the magazine 31 may not be corrected. In this case, the CPU 41 may display guidance in the display region 82A of the YM-axis recovery screen 83 in FIG. 27, regarding the operation of pressing the Next key 831 as procedure 4 after procedure 3 (S105). On the other hand, in the case where the magnitude of the rotation deviation is at or above the threshold (S104: NO), the CPU 41 notifies the operator of the task of rotation correction (S108 and S109), so the operator can carefully rotate the magazine 31 while checking the surroundings of the magazine 31.

The layout of each of the axis return screen 81, the recovery screens 82 to 86, the unrecoverable screen 87, the index tool confirmation screen 88, the end screen 89, and the expressions of the text displayed in each of the display regions may be freely modified.

In the YM-axis recovery processing of FIG. 15, in the case where the rotation deviation of the magazine 31 is below the threshold (S104: YES), automatic rotation correction of the magazine 31 is executed (S107). However, for example, regardless of the magnitude of the rotation deviation, the magazine 31 may be uniformly rotated to return to the reference position (S108 to S111) by the operation of the operation panel 25 by the user. The same applies to the YZM-axis recovery processing in FIG. 16 and the YZM recovery processing (S71) in FIG. 14.

In the process of STEP 2-d shown in FIG. 31(1) of the above-described embodiment, the main shaft 7 positioned at the point M4 on the tool exchange path 52 is first retracted to the ATC origin along the tool exchange path 52, then the position of the magazine 31 is returned to normal, and by pressing the [Tool exchange single operation] key, the main shaft 7 is advanced to the ATC position Z-axis. However, for example, if the point M4 is behind the magazine rotation region, after returning the position of the magazine 31 to normal, the main shaft 7 may be advanced directly from the point M4 along the tool exchange path 52. In this case, instead of pressing the [Tool exchange single operation] key, the main shaft 7 may be advanced to the ATC position axis by pressing the [-Z] key while pressing the [Cancel] key.

In the YZM-axis recovery processing of FIG. 16, in the case where the Z-axis of the main shaft 7 reaches the ATC origin (S123: YES), the CPU 41 executes rotation correction of the magazine 31 (S124 to S127 and S128 to S131), considering that the main shaft 7 has retreated behind the magazine rotation region. However, for example, the current machine coordinates of the main shaft 7 may be detected, and by referring to the coordinate information of the magazine rotation region stored in the storage device 44, it may be determined whether the current Z-axis of the main shaft 7 is within the magazine rotation region or not. Similarly, in the YM-axis recovery processing of FIG. 15, when lowering the Y-axis of the main shaft 7 towards the Y-axis origin (S101 to S103), by referring to the coordinate information of the magazine rotation region stored in the storage device 44, it may be determined whether the current Y-axis of the main shaft 7 is within the magazine rotation region or not.

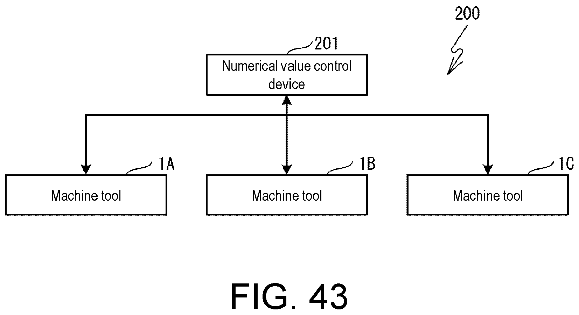

The embodiment is a numerical value control device 40 provided in the machine tool 1, but provided may be a numerical value control system 200 as shown in FIG. 43. The numerical value control system 200 includes a numerical value control device 201 and machine tools 1A, 1B, and 1C. The CPU of the numerical value control device 201 controls and manages the operations of each of the machine tools 1A, 1B, and 1C installed in, for example, a factory. In the case of such a numerical value control system 200, the CPU of the numerical value control device 201 may constitute the "detection unit", "determination unit", "movement control unit", "display control unit", and the like of the present invention.

### Reference Signs List

1: Machine tool
7: Main shaft
26: Display unit
30: ATC device
31: Magazine
37A: Pivot shaft
38: Grip arm
40: Numerical value control device
41: CPU
51, 52: Tool exchange path
90: Tool holder
91: Tool
200: Numerical value control system
201: Numerical value control device

## Claims

1. A numerical value control device, comprising:
a rotation drive unit, rotationally driving a magazine, which comprises a plurality of gripping units capable of gripping tools to be attached to a main shaft of a machine tool, provided along a circumferential direction and rotatable around a pivot shaft, to index any of the gripping units;
a storage unit, storing rotation position coordinates of the magazine corresponding to an index position of the gripping unit as reference coordinates indicating a reference position of the magazine;
a coordinate detection unit, detecting the rotation position coordinates of the magazine;
a deviation determination unit, determining whether rotation deviation exists, which is deviation in a circumferential direction of the pivot shaft of the rotation position coordinates of the magazine detected by the coordinate detection unit, relative to the reference coordinates stored in the storage unit;
a position detection unit, detecting a position of the main shaft;
a determination unit, determining whether the position of the main shaft detected by the position detection unit is located within a magazine rotation region, which is a region in which the magazine rotates; and
a correction request unit, when the deviation determination unit determines that the rotation deviation exists, and the determination unit determines that the position of the main shaft is located within the magazine rotation region, requesting an operation or task to execute rotation correction to return the magazine to the reference position after retracting the main shaft from the magazine rotation region.

2. The numerical value control device according to claim 1, wherein
the correction request unit instructs the rotation drive unit to perform the operation of the rotation correction when the magnitude of the rotation deviation is below a threshold, and notifies an operator to perform the task of the rotation correction when the magnitude of the rotation deviation is at or above the threshold.

3. The numerical value control device according to claim 1, further comprising:
a correction determination unit, determining that the rotation correction is not needed when the magnitude of the rotation deviation is below a threshold, while determining that performing the rotation correction is needed when the magnitude of the rotation deviation is at or above the threshold, and
the correction request unit requesting an operation or task to execute the rotation correction when the correction determination unit determines that performing the rotation correction is needed.

4. The numerical value control device according to claim 1, wherein
the correction request unit requests an operation or task to execute the rotation correction after retracting the main shaft in a direction away from the magazine rotation region along a tool exchange path, which is a path for moving the main shaft when performing tool exchange between the main shaft and the gripping unit.

5. The numerical value control device according to claim 4, wherein
the tool exchange path comprises a predetermined path connecting a tool exchange position at which the main shaft performs the tool exchange with the magazine, and a tool exchange preparation position which is separated from the tool exchange position in a direction perpendicular to an axial direction of the main shaft and is at the same position as the tool exchange position in the axial direction, and
the correction request unit requests an operation or task to execute the rotation correction after retracting the main shaft to the tool exchange preparation position along the predetermined path when the main shaft is positioned on the predetermined path and within the magazine rotation region.

6. The numerical value control device according to claim 4, wherein
the machine tool performs the tool exchange of the main shaft with the magazine by reciprocating the main shaft between a tool exchange position on the tool exchange path and an origin position separated from the tool exchange position in an axial direction of the main shaft, and
the correction request unit requests an operation or task to execute the rotation correction after retracting the main shaft to the origin position when the main shaft is positioned between the tool exchange position and the origin position and within the magazine rotation region.

7. The numerical value control device according to claim 4, wherein
the deviation determination unit determines whether the rotation deviation exists when the tool exchange is stopped midway.

8. The numerical value control device according to claim 4, wherein
the deviation determination unit determines whether the rotation deviation exists when the power of the machine tool is turned on after being turned off during the tool exchange.

9. The numerical value control device according to any one of claims 1 to 3, wherein
an axial direction of the main shaft is horizontal.

10. A numerical value control system, comprising:
a machine tool and a numerical value control device, wherein
the numerical value control device comprises:
a rotation drive unit that rotationally drives a magazine, which comprises a plurality of gripping units capable of gripping tools to be attached to a main shaft of the machine tool, provided along a circumferential direction and rotatable around a pivot shaft, to index any of the gripping units;
a storage unit that stores rotation position coordinates of the magazine corresponding to an index position of the gripping unit as reference coordinates indicating a reference position of the magazine;
a coordinate detection unit that detects the rotation position coordinates of the magazine;
a deviation determination unit that determines whether rotation deviation exists, which is deviation in the circumferential direction of the pivot shaft of the rotation position coordinates of the magazine detected by the coordinate detection unit, relative to the reference coordinates stored in the storage unit;
a position detection unit that detects a position of the main shaft;
a determination unit that determines whether the position of the main shaft detected by the position detection unit is located within a magazine rotation region, which is a region in which the magazine rotates; and
a correction request unit that, when the deviation determination unit determines that the rotation deviation exists, and the determination unit determines that the position of the main shaft is located within the magazine rotation region, requests an operation or task to execute rotation correction to return the magazine to the reference position after retracting the main shaft from the magazine rotation region.

11. A control method of a numerical value control device that controls an operation of a machine tool, comprising:
a rotation drive process of rotationally driving a magazine, which comprises a plurality of gripping units capable of gripping tools to be attached to a main shaft of the machine tool, provided along a circumferential direction and rotatable around a pivot shaft, to index any of the gripping units;
a coordinate detection process of detecting rotation position coordinates of the magazine;
a deviation determination process of determining whether rotation deviation exists, which is deviation in a circumferential direction of the pivot shaft of the rotation position coordinates of the magazine detected in the coordinate detection process relative to reference coordinates stored in a storage unit that stores the rotation position coordinates of the magazine corresponding to an index position of the gripping unit as the reference coordinates indicating a reference position of the magazine;
a position detection process of detecting a position of the main shaft;
a determination process of determining whether the position of the main shaft detected in the position detection process is located within a magazine rotation region, which is a region in which the magazine rotates; and
a correction request process of, when the rotation deviation is determined to exist in the deviation determination process, and the position of the main shaft is determined to be located within the magazine rotation region in the determination process, requesting an operation or task to execute rotation correction to return the magazine to the reference position after retracting the main shaft from the magazine rotation region.

12. A program for operating a numerical value control device that controls an operation of a machine tool,
executing, by a computer,
rotation drive processing of rotationally driving a magazine, which comprises a plurality of gripping units capable of gripping tools to be attached to a main shaft of the machine tool, provided along a circumferential direction and rotatable around a pivot shaft, to index any of the gripping units;
coordinate detection processing of detecting rotation position coordinates of the magazine;
deviation determination processing of determining whether rotation deviation exists, which is deviation in a circumferential direction of the pivot shaft of the rotation position coordinates of the magazine detected in the coordinate detection processing relative to reference coordinates stored in a storage unit that stores the rotation position coordinates of the magazine corresponding to an index position of the gripping unit as the reference coordinates indicating a reference position of the magazine;
position detection processing of detecting a position of the main shaft;
determination processing of determining whether the position of the main shaft detected in the position detection processing is located within a magazine rotation region, which is a region in which the magazine rotates; and
correction request processing of, when the rotation deviation is determined to exist in the deviation determination processing, and the position of the main shaft is determined to be located within the magazine rotation region in the determination processing, requesting an operation or task to execute rotation correction to return the magazine to the reference position after retracting the main shaft from the magazine rotation region.

13. A numerical value control device, comprising:
a control unit; and
a storage unit, storing a program, and
the control unit executing the program to implement the control method of claim 11.
